(19) Europäisches Patentamt
European Patent Office
Office européen des brevets

(11) EP 3 932 994 A1

(12) **EUROPEAN PATENT APPLICATION**
published in accordance with Art. 153(4) EPC

(43) Date of publication:
**05.01.2022 Bulletin 2022/01**

(21) Application number: **19916975.6**

(22) Date of filing: **28.10.2019**

(51) Int Cl.:
***C08L 101/00*** *(2006.01)* ***C08L 23/00*** *(2006.01)*
***C08L 25/06*** *(2006.01)* ***C08L 69/00*** *(2006.01)*
***C08L 71/00*** *(2006.01)* ***C08L 77/00*** *(2006.01)*

(86) International application number:
**PCT/JP2019/042220**

(87) International publication number:
**WO 2020/174748 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2019 JP 2019037036**

(71) Applicant: **Idemitsu Kosan Co., Ltd.**
**Chiyoda-ku**
**Tokyo, 100-8321 (JP)**

(72) Inventors:
- **YASUDA, Hiroshi**
  **Ichihara-shi, Chiba 299-0193 (JP)**
- **KOORI, Yohei**
  **Sodegaura-shi, Chiba 299-0293 (JP)**
- **SUDO, Ken**
  **Sodegaura-shi, Chiba 299-0293 (JP)**
- **SENGA, Minoru**
  **Sodegaura-shi, Chiba 299-0293 (JP)**

(74) Representative: **Gille Hrabal**
**Partnerschaftsgesellschaft mbB**
**Patentanwälte**
**Brucknerstraße 20**
**40593 Düsseldorf (DE)**

# (54) RESIN COMPOSITION AND MOLDED BODY OF SAME

(57) Provided is a resin composition containing a resin (S) containing a polyarylene ether (A) modified with a functional group and a thermoplastic resin (B), and a carbon fiber (C).

FIG. 1

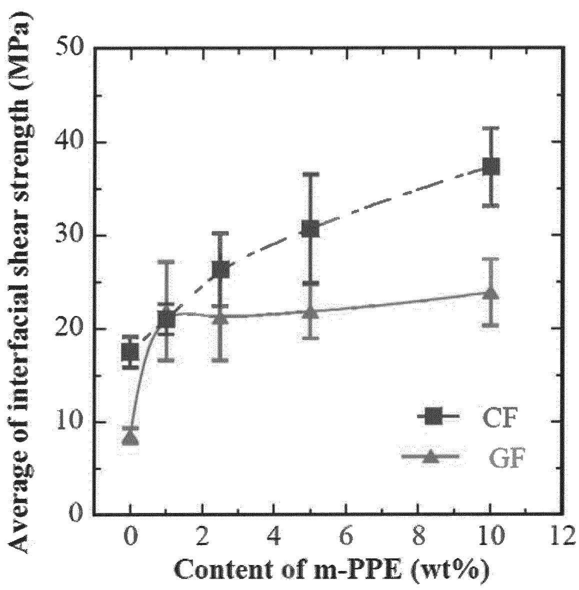


EP 3 932 994 A1

## Description

TECHNICAL FIELD

The present invention relates to a resin composition and a molded body thereof.

BACKGROUND ART

In recent years, particularly in the field of automobiles, an improvement in fuel economy by reducing the weight thereof has been studied. For example, there has been an active movement to replace conventional metallic structural members with fiber reinforced plastics, and fiber reinforced plastics having excellent strength have been demanded.

As a fiber used for reinforcement, a carbon fiber (which may be hereinafter abbreviated as CF) is known as one of the lowest density reinforcing fibers. However, since CF has a small number of functional groups on the fiber surface, there is a problem that it is difficult to improve the adhesive force between the fiber and the resin, that is, the interfacial shear strength. As the carbon fiber composite material, a carbon fiber reinforced composite material (carbon fiber reinforced plastic, which may be hereinafter abbreviated as CFRP) in which an epoxy resin is used as a matrix is known and is being used in an aircraft or the like (PTL 1). CFRP using a thermosetting epoxy resin can have excellent product strength because the uncured epoxy resin itself has a reactive functional group and the interfacial shear strength increases in the curing process. However, there is a problem in application to general-purpose applications due to long curing time, complicated molding processing, difficulty in recycling, high cost, and the like.

On the other hand, a carbon fiber composite material having a thermoplastic resin as a matrix (a carbon fiber reinforced thermoplastic resin, which may be hereinafter abbreviated as CFRTP) has been studied for practical use because of its advantages such as ease of molding processing and ease of recycling (PTL 2).

CITATION LIST

PATENT LITERATURE

[PTL 1] JP 2008-208201 A
[PTL 2] JP 2018-145245 A

SUMMARY OF INVENTION

TECHNICAL PROBLEM

When a thermoplastic resin is used as a matrix, although there are advantages such as ease of molding processing and ease of recycling as described above, there is a problem in the strength of the obtained member.

Since a thermoplastic resin does not have a reactive functional group and has a low interfacial shear strength with CF, a method of improving adhesion between a carbon fiber and a resin by devising a sizing agent for the carbon fiber, adding a thermoplastic resin having a reactive functional group, or the like is used. However, for example, when application to automobile members is considered, sufficient product strength cannot be obtained yet, and it is required to improve interfacial shear strength and improve product physical properties.

SOLUTION TO PROBLEM

In view of the above-mentioned problems, the present inventors have studied to obtain a resin composition having a high interfacial shear strength at the interface between a resin and a carbon fiber and excellent moldability and mechanical strength. As a result, it has been found that a resin composition containing a resin containing a polyarylene ether modified with a functional group and a thermoplastic resin, and a carbon fiber can solve the above-mentioned problems. Further, the present inventors have found that the above-mentioned problems can be solved by a production method including a step of preparing a carbon member containing a polyarylene ether not modified with a functional group, and a carbon fiber, and a step of adding a thermoplastic resin to the carbon member. Specifically, the present invention relates to the following [1] to [19].

[1] A resin composition containing a resin (S) containing a polyarylene ether (A) modified with a functional group and a thermoplastic resin (B), and a carbon fiber (C).

[2] The resin composition as set forth in [1] above, wherein the polyarylene ether (A) modified with a functional group is a dicarboxylic acid-modified polyarylene ether.
[3] The resin composition as set forth in [2] above, wherein the dicarboxylic acid-modified polyarylene ether is a fumaric acid-modified polyarylene ether or a maleic anhydride-modified polyarylene ether.
[4] The resin composition as set forth in any one of [1] to [3] above, wherein the polyarylene ether (A) modified with a functional group is contained in an amount of 0.5 to 30% by mass based on 100% by mass of the resin (S).
[5] The resin composition as set forth in any one of [1] to [4] above, which contains 1 to 500 parts by mass of the carbon fiber (C) with respect to 100 parts by mass of the resin (S).
[6] The resin composition as set forth in any one of [1] to [4] above, which contains 1 to 50 parts by mass of the carbon fiber (C) with respect to 100 parts by mass of the resin (S).
[7] The resin composition as set forth in any one of [1] to [6] above, wherein the thermoplastic resin (B) is at least one selected from the group consisting of a polycarbonate-based resin, a polystyrene-based resin, a polyamide, and a polyolefin.
[8] The resin composition as set forth in [7] above, wherein the thermoplastic resin (B) is a polystyrene-based resin.
[9] The resin composition as set forth in any one of [1] to [8] above, wherein the carbon fiber (C) is at least one carbon fiber selected from the group consisting of a PAN-based carbon fiber, a pitch-based carbon fiber, a thermosetting carbon fiber, a phenol-based carbon fiber, a vapor-grown carbon fiber, and a recycled carbon fiber (RCF).
[10] A molded body including the resin composition as set forth in any one of [1] to [9] above.
[11] The molded body as set forth in [10] above, which is an injection molded body.
[12] The molded body as set forth in [10] above, which is a unidirectional fiber reinforcement.
[13] The molded body as set forth in [10] above, including at least one member selected from the group consisting of woven carbon fibers and non-woven carbon fibers.
[14] A laminated body obtainable by laminating a plurality of the molded bodies as set forth in any one of [10] to [13] above.
[15] A method for producing the molded body as set forth in any one of [10] to [13] above, including: a step of preparing a carbon member containing the polyarylene ether (A) modified with a functional group and the carbon fiber (C); and a step of adding the thermoplastic resin (B) to the carbon member.
[16] A method for producing a resin molded body, including: a step of preparing a carbon member containing a polyarylene ether not modified with a functional group and a carbon fiber; and a step of adding a thermoplastic resin to the carbon member.
[17] The method for producing a resin molded body as set forth in [16] above, wherein the carbon member has at least one form selected from the group consisting of a woven fabric, a non-woven fabric, and a unidirectional material.
[18] A resin molded body obtainable by the production method as set forth in [16] or [17] above.
[19] A laminated body obtainable by laminating a plurality of the molded bodies as set forth in [18] above.

## ADVANTAGEOUS EFFECTS OF INVENTION

According to the present invention, it is possible to obtain a resin composition having high interfacial shear strength at the interface between the resin and the carbon fiber and excellent moldability and mechanical strength, a molded article thereof, and a composite material.

## BRIEF DESCRIPTION OF DRAWINGS

Fig. 1 is a graph showing the behavior of interfacial shear strength by the micro-droplet method.

## DESCRIPTION OF EMBODIMENTS

A first embodiment of the present invention provides a resin composition containing a resin (S) containing a polyarylene ether (A) modified with a functional group and a thermoplastic resin (B), and a carbon fiber (C), a molded body (including a laminated body) thereof, and a method for producing the molded body.
A second embodiment of the present invention provides a method for producing a resin molded body, a molded body thereof, and a laminated body thereof. The second embodiment is characterized in that a polyarylene ether not modified with a functional group, a carbon fiber and a thermoplastic resin are used as a molding body material.
Hereinafter, the resin composition, the molded article thereof, and the composite material of the present invention will be described in detail. In the description herein, preferred definitions can be arbitrarily adopted, and a combination of preferred definitions is more preferred. In the description herein, "XX to YY" means "XX or more and YY or less",
**[0014]** In the first embodiment of the present invention, the term "composition" refers to a substance containing the resin (S) and the carbon fiber (C), and the method of containing the resin (S) and the carbon fiber (C) is not limited.

Examples thereof include a product obtained by blending the resin (S) and the carbon fiber (C), and a product obtained by immersing the resin (S) in a member containing the carbon fiber (C). In the case where the carbon fiber (C) is a member having the form of a woven fabric, a non-woven fabric, or a unidirectional material, a composite material obtained by immersing the resin (S) in the carbon fiber member is also included in the "composition" in the present invention.

Note that, in common with both the first embodiment and the second embodiment, in the description herein, a case where a resin or the like is "immersed" in a carbon fiber or a carbon member includes all forms in which a resin component or the like is added to the carbon fiber (carbon member). For example, it does not matter how it is added, such as simply soaking, immersing, impregnating, dipping, etc.

In the second embodiment of the present invention, the carbon member may be obtained from a step of preparing a carbon member containing a polyarylene ether not modified with a functional group, and a carbon fiber, and a specific method of preparing the carbon member is not particularly limited.

1. First Embodiment of the Present Invention

[Resin (S)]

The resin (S) contained in the resin composition according to the first embodiment of the present invention contains a polyarylene ether (A) modified with a functional group and a thermoplastic resin (B).

<Polyarylene Ether (A) Modified with a Functional Group>

The polyarylene ether (A) modified with a functional group contained in the resin composition according to the first embodiment can be obtained by reacting a polyarylene ether described below with a modifier described below.

The polyarylene ether used as a raw material for the polyarylene ether (A) modified with a functional group, contained in the resin composition according to the first embodiment is not particularly limited.

Examples of the polyarylene ether include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly[2-(4'-methylphenyl)-1,4-phenylene ether], poly(2-phenyl-1,4-phenylene ether), poly(2-chloro-1,4-phenylene ether), poly(2-methyl-1,4-phenylene ether), poly(2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether), and poly (2,6-dimethyl-1,4-phenylene ether). Alternatively, the polymers and copolymers described in U.S. Patent Nos. 3,306,874, 3,306,875, 3,257,357, and 3,257,358 are also suitable. Further examples include graft copolymers and block copolymers of a vinyl aromatic compound such as polystyrene and the above-mentioned polyphenylene ether. Among them, poly(2,6-dimethyl-1,4-phenylene ether) is particularly preferably used.

The degree of polymerization of the polyarylene ether is not particularly limited and may be appropriately selected depending on the intended purpose or the like, and usually can be selected from the range of 60 to 400. When the degree of polymerization is 60 or more, the strength of the resin composition containing the polyarylene ether (A) modified with a functional group can be improved, as will be described later in detail. When it is 400 or less, good moldability can be maintained.

Examples of the modifier for modifying the polyarylene ether include an acid modifier, an amino group-containing modifier, a phosphorus compound, a hydroxy group-containing modifier, a halogen-containing modifier, an epoxy group-containing modifier, and an unsaturated hydrocarbon group-containing modifier. Examples of the acid modifier include a dicarboxylic acid and a derivative thereof.

Examples of the dicarboxylic acid used as the modifier include maleic anhydride and a derivative thereof, and fumaric acid and a derivative thereof. The derivative of maleic anhydride is a compound having an ethylenic double bond and a polar group such as a carboxy group or an acid anhydride group in the same molecule. Specific examples thereof include maleic acid, maleic acid monoester, maleic acid diester, maleimide and its N-substituted product (e.g., N-substituted maleimide, maleic acid monoamide, maleic acid diamide), ammonium salt of maleic acid, metal salt of maleic acid, acrylic acid, methacrylic acid, methacrylic acid ester, and glycidyl methacrylate. Specific examples of the fumaric acid derivative include fumaric acid diester, fumaric acid metal salt, fumaric acid ammonium salt, and fumaric acid halide. Among them, fumaric acid or maleic anhydride is particularly preferably used.

The polyarylene ether (A) modified with a functional group can be obtained by reacting the polyarylene ether with a modifier. As the polyarylene ether modified with a functional group, a dicarboxylic acid-modified polyarylene ether is preferable, and a fumaric acid-modified polyarylene ether or a maleic acid-modified polyarylene ether is more preferable. Specific examples thereof include modified polyphenylene ether-based polymers such as a (styrene-maleic anhydride)-polyphenylene ether-graft polymer, a maleic anhydride-modified polyphenylene ether, a fumaric acid-modified polyphenylene ether, a glycidyl methacrylate-modified polyphenylene ether, and an amine-modified polyphenylene ether. Among them, a modified polyphenylene ethe is preferable, a maleic anhydride-modified polyphenylene ether or a fumaric acid-modified polyphenylene ether is more preferable, and a fumaric acid-modified polyphenylene ether is particularly preferable.

The degree of modification (degree of modification or amount of modification) of the polyarylene ether (A) modified with a functional group can be determined by infrared (IR) absorption spectroscopy or a titration method.

When the degree of modification is determined by infrared (IR) absorption spectroscopy, the degree of modification can be determined from an intensity ratio of spectra of a peak intensity indicating absorption of a compound used as a modifier and a peak intensity indicating absorption of a corresponding polyarylene ether. For example, in the case of a fumaric acid-modified polyphenylene ether, the degree of modification is determined from the ratio of the peak intensity (A) of 1790 $cm^{-1}$ indicating the absorption of fumaric acid to the peak intensity (B) of 1704 $cm^{-1}$ indicating the absorption of polyphenylene ether (PPE) by using the formula: degree of modification = (A)/(B). The degree of modification of the polyarylene ether (A) modified with a functional group is preferably 0.05 to 20.

When the amount of modification is determined by titration, it can be determined as the acid content from the neutralization titration measured in accordance with JIS K 0070-1992. The amount of modification of the polyarylene ether (A) modified with a functional group is preferably 0.1 to 20% by mass, more preferably 0.5 to 15% by mass, still more preferably 1.0 to 10% by mass, and particularly preferably 1.0 to 5.0% by mass with respect to the mass of the polyarylene ether.

This will be described in more detail. The polyarylene ether (A) modified with a functional group can be prepared by reacting a polyarylene ether with various modifiers in the presence or absence of a radical generator, optionally in the presence of a solvent or other resins. As a modification method, solution modification or melt modification is known.

When the above-mentioned fumaric acid or a derivative thereof is used as a modifier, a polyarylene ether is reacted with fumaric acid or a derivative thereof in the presence or absence of a radical generator, optionally in the presence of an aromatic hydrocarbon solvent and another resin to obtain a fumaric acid-modified polyarylene ether. The aromatic hydrocarbon solvent is not particularly limited as long as it dissolves the polyarylene ether, fumaric acid or a derivative thereof, and the radical generator optionally used, and is inert to the generated radical. Specific preferred examples thereof include benzene, toluene, ethylbenzene, xylene, chlorobenzene, and tert-butylbenzene. Among them, benzene, toluene, chlorobenzene, and tert-butylbenzene having a small chain transfer constant are preferably used. These solvents may be used alone or in combination of two or more thereof. The amount of the aromatic hydrocarbon solvent used is also not particularly limited and may be appropriately selected depending on the situation. In general, it may be determined in the range of 1 to 20 times (mass ratio) with respect to the polyarylene ether to be used.

The amount of fumaric acid or a derivative thereof used as a modifier is preferably 1 to 20 parts by mass, and more preferably 3 to 15 parts by mass with respect to 100 parts by mass of the polyarylene ether. When the amount is 1 part by mass or more, a sufficient amount of modification (degree of modification) can be obtained. When the amount is 20 parts by mass or less, post-treatment such as purification after modification can be appropriately performed.

The radical generator optionally used for solution modification of the polyarylene ether is not particularly limited. In order to have a decomposition temperature suitable for the reaction temperature and to effectively graft the modifier onto the polyarylene ether, those having a large hydrogen abstraction ability are preferred. Specific examples thereof include di-tert-butyl peroxide, dicumyl peroxide, 1,1-bis(tert-butylperoxy)cyclohexane, 1,1-bis(tert-butylperoxy)-3,3,5-trimethylcyclohexane, benzoyl peroxide, and decanoyl peroxide. The amount of the radical generator used is preferably 15 parts by mass or less with respect to 100 parts by mass of the polyarylene ether. When the amount of the radical generator is 15 parts by mass or less, an insoluble component is hardly generated, which is preferable. When the modification is performed in the absence of a radical generator, a polyarylene ether having a low amount of modification (degree of modification) (for example, an amount of modification of 0.3 to 0.5% by mass) is obtained.

When the polyarylene ether is subjected to solution modification, specifically, the polyarylene ether and, for example, fumaric acid or a derivative thereof as a modifier are dissolved in an aromatic hydrocarbon solvent to be homogeneous, and then, when a radical generator is used, the radical generator is added at an arbitrary temperature at which the half-life of the radical generator is 1 hour or less, and the reaction is performed at the temperature. A temperature at which the half-life of the radical generator used exceeds 1 hour is not preferable because a long reaction time is required.

The reaction time can be appropriately selected, but in order to allow the radical generator to effectively act, it is preferable to carry out the modification reaction at a predetermined reaction temperature for a time that is three times or more the half-life of the radical generator.

After completion of the reaction, the reaction solution is added to a poor solvent for polyarylene ether, such as methanol, and the precipitated modified polyarylene ether is recovered and dried to obtain the desired polyarylene ether modified with a functional group.

When the polyarylene ether is melt-modified, the polyarylene ether and, for example, fumaric acid or a derivative

thereof as a modifier are melt-kneaded in an extruder in the presence or absence of a radical generator to obtain a polyarylene ether modified with a functional group. The amount of fumaric acid or a derivative thereof used is preferably 1 to 5 parts by mass, and more preferably 2 to 4 parts by mass with respect to 100 parts by mass of the polyarylene ether. When the amount is 1 part by mass or more, the amount of modification (degree of modification) is sufficient, and when the amount is 5 parts by mass or less, the modification efficiency of fumaric acid or a derivative thereof can be favorably maintained, and the amount of fumaric acid or the like remaining in the pellet can be suppressed.

The radical generator used for melt modification of the polyarylene ether preferably has a temperature showing a half-life of 1 minute of 300°C or higher. When the radical generator having a temperature showing a half-life of 1 minute of less than 300°C, such as a peroxide or an azo compound is used, the effect of modifying the polyarylene ether is insufficient.

Specific examples of the radical generator include 2,3-dimethyl-2,3-diphenylbutane, 2,3-diethyl-2,3-diphenylbutane, 2,3-diethyl-2,3-diphenylhexane, and 2,3-dimethyl-2,3-di(p-methylphenyl)butane. Among them, 2,3-dimethyl-2,3-diphenylbutane having a temperature showing a half-life of 1 minute of 330°C is preferably used.

The amount of the radical generator used is selected in the range of preferably 0.1 to 3 parts by mass, and more preferably 0.5 to 2 parts by mass with respect to 100 parts by mass of the polyarylene ether. When the amount is 0.1 parts by mass or more, a high modification effect can be obtained, and when the amount is 3 parts by mass or less, the polyarylene ether can be efficiently modified, and insoluble components are less likely to be generated.

Examples of the method for melt-modifying a polyarylene ether include a method in which a polyarylene ether, fumaric acid or a derivative thereof, and a radical generator are uniformly dry-blended at room temperature, and then a melt reaction is performed substantially at a kneading temperature of the polyarylene ether in the range of 300 to 350°C. When the temperature is 300°C or higher, the melt viscosity can be appropriately maintained, and when the temperature is 350°C or lower, the decomposition of the polyarylene ether can be suppressed.

In the case of a particularly preferable fumaric acid-modified polyarylene ether among the polyarylene ethers modified with a functional group obtained by the method described in detail above, the amount of modification (modifier content) determined by the titration method described above is preferably 0.1 to 20% by mass, more preferably 0.5 to 15% by mass, still more preferably 1 to 10% by mass, and particularly preferably 1.0 to 5.0% by mass. When the amount of modification is 0.1% by mass or more, a polyarylene ether having sufficient mechanical properties and heat resistance can be obtained. The amount of modification is sufficient 20% by mass or less.

<Thermoplastic Resin (B)>

The thermoplastic resin (B) contained in the resin composition according to the first embodiment of the present invention is not particularly limited, and specific examples thereof include a polyamide resin, an acrylic resin, a polyphenylene sulfide resin, a polyvinyl chloride resin, a polystyrene-based resin, a polyolefin, a polyacetal resin, a polycarbonate-based resin, a polyurethane, a polybutylene terephthalate, an acrylonitrile butadiene styrene (ABS) resin, a modified polyphenylene ether resin, a phenoxy resin, a polysulfone, a polyethersulfone, a polyetherketone, a polyetheretherketone, and an aromatic polyester. Among these, at least one selected from the group consisting of a polycarbonate-based resin, a polystyrene-based resin, a polyamide, and a polyolefin is preferable, and a polyamide, a polycarbonate-based resin, or a polystyrene-based resin is more preferable. According to one aspect, the thermoplastic resin (B) is a polystyrene-based resin or a polyamide.

The polystyrene-based resin is not particularly limited, and examples thereof include a rubber-modified polystyrene resin (high impact polystyrene) in which a rubber-like polymer is dispersed in the form of particles in a matrix composed of a homopolymer of a styrene-based compound, a copolymer of two or more styrene-based compounds, and a polymer of a styrene-based compound. Examples of the styrene-based compound as a raw material include styrene, o-methylstyrene, p-methylstyrene, m-methylstyrene, $\alpha$-methylstyrene, ethylstyrene, $\alpha$-methyl-p-methylstyrene, 2,4-dimethylstyrene, monochlorostyrene, and p-tert-butylstyrene.

The polystyrene-based resin may be a copolymer obtained by using two or more kinds of styrene-based compounds in combination. Among them, polystyrene obtained by polymerizing styrene alone is preferable. Examples thereof include polystyrene having a stereoregular structure such as atactic polystyrene, isotactic polystyrene, and syndiotactic polystyrene. As the thermoplastic resin (B) contained in the resin composition of the present invention, syndiotactic polystyrene is particularly preferable.

Syndiotactic polystyrene refers to a styrene-based resin having a highly syndiotactic structure (which may be hereinafter abbreviated as SPS). In the description herein, the term "syndiotactic" means that the proportion of phenyl rings in adjacent styrene units that are arranged alternately (hereinafter referred to as syndiotacticity) with respect to a plane formed by the main chain of the polymer block is high.

Tacticity can be quantitatively identified by a nuclear magnetic resonance method using isotope carbon ($^{13}C$-NMR method). By the $^{13}C$-NMR method, it is possible to quantify the abundance ratio of a plurality of continuous constituent units, for example, two continuous monomer units as diads, three continuous monomer units as triads, and

five continuous monomer units as pentads.

The term "styrene-based resin having a highly syndiotactic structure" means polystyrene, poly(hydrocarbon-substituted styrene), poly(halogenated styrene), poly(halogenated alkylstyrene), poly(alkoxystyrene), poly(vinylbenzoic acid ester), hydrogenated polymers or mixtures thereof, or copolymers containing these as a main component, which have a syndiotacticity of usually 75 mol% or more, and preferably 85 mol% or more in racemic diad (r), or usually 30 mol% or more, and preferably 50 mol% or more in racemic pentad (rrrr).

Examples of the poly(hydrocarbon-substituted styrene) include poly(methylstyrene), poly(ethylstyrene), poly(isopropylstyrene), poly(tert-butylstyrene), poly(phenyl) styrene, poly(vinylnaphthalene), and poly(vinylstyrene). Examples of the poly(halogenated styrene) include poly(chlorostyrene), poly(bromostyrene), and poly(fluorostyrene), and examples of the poly(halogenated alkylstyrene) include poly(chloromethylstyrene). Examples of the poly(alkoxystyrene) include poly(methoxystyrene) and poly(ethoxystyrene).

Particularly preferred examples of the styrene-based polymer include polystyrene, poly(p-methylstyrene), poly(m-methylstyrene), poly(p-tert-butylstyrene), poly(p-chlorostyrene), poly(m-chlorostyrene), and poly(p-fluorostyrene).

Further, copolymers of styrene and p-methylstyrene, copolymers of styrene and p-tert-butylstyrene, copolymers of styrene and divinylbenzene, and the like can be mentioned.

The molecular weight of the syndiotactic polystyrene is not particularly limited, but the weight average molecular weight is preferably $1 \times 10^4$ or more and $1 \times 10^6$ or less, more preferably 50,000 or more and 500,000 or less, and still more preferably 50,000 or more and 300,000 or less from the viewpoint of the fluidity of the resin during molding and the mechanical properties of the molded body to be obtained. When the weight average molecular weight is $1 \times 10^4$ or more, a molded article having sufficient mechanical properties can be obtained. On the other hand, when the weight average molecular weight is $1 \times 10^6$ or less, there is no problem in the fluidity of the resin during molding.

When the MFR of syndiotactic polystyrene is measured under conditions of a temperature of 300°C and a load of 1.2 kgf, the MFR is preferably 2 g/10 min or more, and more preferably 4 g/10 min or more, and within this range, there is no problem with the fluidity of the resin during molding. When the MFR is 50 g/10 min or less, preferably 40 g/10 min or less, and more preferably 30 g/10 min or less, a molded article having sufficient mechanical properties can be obtained.

As the polyamide, all known polyamides can be used.

Suitable polyamides include, for example, polyamide-4, polyamide-6, polyamide-6,6, polyamide-3,4, polyamide-12, polyamide-11, polyamide-6,10, polyamide-4T, polyamide-6T, polyamide-9T, polyamide-10T, and polyamides obtained from adipic acid and m-xylylenediamine. Of these, polyamide-6,6 is preferable.

[Carbon Fiber (C)]

The carbon fiber (C) contained in the resin composition according to the first embodiment of the present invention is not particularly limited, and various carbon fibers such as PAN-based carbon fibers using polyacrylonitrile as a raw material, pitch-based carbon fibers using coal tar pitch in petroleum or coal as a raw material, and phenol-based carbon fibers using a thermosetting resin, for example, a phenol resin as a raw material can be used. The carbon fiber (C) may be obtained by a vapor phase growth method or may be a recycled carbon fiber (RCF). Thus, the carbon fiber (C) is not particularly limited, but is preferably at least one carbon fiber selected from the group consisting of a PAN-based carbon fiber, a pitch-based carbon fiber, a thermosetting carbon fiber, a phenol-based carbon fiber, a vapor-grown carbon fiber, and a recycled carbon fiber (RCF).

Carbon fibers can be used regardless of the degree of graphitization, although the degree of graphitization may be changed depending on the raw material quality and firing temperature during production. The shape of the carbon fiber (C) is not particularly limited, and carbon fibers having at least one shape selected from the group consisting of milled fibers, bundled and cut (chopped strands), short fibers, rovings, filaments, tows, whiskers, nanotubes, and the like can be used. In the case of bundled and cut (chopped strands), those having an average fiber length of 0.1 to 50 mm and an average fiber diameter of 5 to 20 $\mu$m are preferably used.

The density of the carbon fibers is not particularly limited, but is preferably 1.75 to 1.95 g/cm$^3$.

The form of the carbon fiber (C) may be a single fiber or a fiber bundle, or both a single fiber and a fiber bundle may be mixed. The number of single fibers constituting each fiber bundle may be substantially uniform or may be different in each fiber bundle. The average fiber diameter of the carbon fiber (C) varies depending on the form, for example, carbon fibers having an average fiber diameter of preferably 0.0004 to 15 $\mu$m, more preferably 3 to 15 $\mu$m, and still more preferably 5 to 10 $\mu$m can be used.

As described above, in the description herein, the "composition" of the first embodiment only needs to contain the resin (S) and the carbon fiber (C), and there is no limitation on the method of containing them. A product (composite material) in which the resin (S) is immersed in a member containing the carbon fiber (C) is also included in the "composition" and the "molded article containing the composition" in the present invention. Examples thereof include a product in which the resin (S) is immersed in a carbon fiber member having a form of a woven fabric, a non-woven fabric, or a unidirectional

material.

Alternatively, after adding the functional group-modified polyarylene ether (A) to the carbon fiber (C) in advance, the thermoplastic resin (B) can be added, resulting in a composition containing the resin (S) and the carbon fiber (C).

When the member containing the carbon fiber (C) is a woven fabric, a non-woven fabric, or a unidirectional material, a single fiber having an average fiber diameter of preferably 3 to 15 μm, and more preferably 5 to 7 μm can be used. When the member containing the carbon fiber (C) has the form of a woven fabric, a non-woven fabric, or a unidirectional material, a fiber bundle obtained by bundling the carbon fibers in one direction can be used. As the member containing the carbon fiber (C), a product obtained by bundling 6,000 (6K), 12,000 (12K), 24,000 (24K), 60,000 (60K), or the like single fibers of carbon fibers supplied from a carbon fiber manufacturer as a fiber bundle may be used as it is, or a product obtained by further bundling these may be used. The fiber bundle may be any of a non-twisted yarn, a twisted yarn, and a untwisted yarn. The fiber bundle may be included in the molded body in an opened state, or may be included as a fiber bundle without being opened. In the case where the member containing the carbon fiber (C) is a woven fabric, a non-woven fabric, or a unidirectional material, a molded body can be obtained by immersing the member in the resin (S).

The member containing the carbon fiber (C), particularly a woven fabric, a non-woven fabric, or a unidirectional material, is preferably thin. From the viewpoint of obtaining a thin carbon-fiber composite material, the member containing the carbon fiber (C) preferably has a thickness of 3 mm or less. Particularly in the case of a unidirectional material, the thicknesses is preferably 0.2 mm or less. The lower limit of the thickness of the member containing the carbon fiber (C) is not particularly limited, but it is preferably 7 μm or more, and from the viewpoint of quality stability, it is preferably 10 μm or more, and more preferably 20 μm or more.

(Sizing Agent)

The carbon fiber (C) contained in the resin composition of the present invention may have a sizing agent attached to the surface thereof. When the carbon fiber to which the sizing agent is attached is used, the type of the sizing agent can be appropriately selected depending on the types of the carbon fiber and the thermoplastic resin, and is not particularly limited. Various types of carbon fibers have been commercialized, such as those treated with an epoxy-based sizing agent, a urethane-based sizing agent, or a polyamide-based sizing agent, or those not containing a sizing agent. In the present invention, carbon fibers can be used regardless of the type or presence of a sizing agent.

From the viewpoint of increasing the interfacial shear strength between the resin (S) and the carbon fiber (C), the polyarylene ether (A) modified with a functional group is contained in an amount of preferably 0.5 to 30% by mass, more preferably 0.8 to 15% by mass, and still more preferably 1.0 to 10% by mass based on 100% by mass of the resin (S). When the amount of the polyarylene ether (A) modified with a functional group in the resin (S) is 0.5% by mass or more, excellent interfacial shear strength can be obtained. When the amount of the polyarylene ether (A) is 30% by mass or less, the mechanical strength and heat resistance of a molded article to be obtained can be favorably maintained.

In the resin composition of the present invention, the carbon fiber (C) is contained in an amount of preferably 1 to 500 parts by mass, more preferably 1 to 400 parts by mass, still more preferably 1 to 350 parts by mass, yet still more preferably 1 to 200 parts by mass, even more preferably 1 to 100 parts by mass, and yet even more preferably 1 to 50 parts by mass with respect to 100 parts by mass of the resin (S). Further, in order to obtain excellent strength, it is preferably contained in an amount of 15 parts by mass or more, and more preferably 20 parts by mass or more. When the amount of the carbon fiber (C) is within the above range, a molded article or a composite material containing the resin composition of the present invention has excellent mechanical strength.

2. Second Embodiment of the Present Invention

A second embodiment of the present invention relates to a production method of a resin molded body, and a molded body and a laminated body obtained by the production method. The second embodiment is characterized in that a polyarylene ether not modified with a functional group, a carbon fiber and a thermoplastic resin are used as a molding body material. Specifically, the method includes a step of preparing a carbon member containing a polyarylene ether not modified with a functional group and a carbon fiber, and a step of adding a thermoplastic resin to the carbon member.

<Polyarylene Ether Not Modified with a Functional Group>

Examples of the polyarylene ether not modified with a functional group (hereinafter, may be simply referred to as "unmodified polyarylene ether") contained in the carbon member in the present embodiment include those described in detail in the first embodiment as a raw material of the polyarylene ether (A) modified with a functional group. Among these, as in the first embodiment, poly(2,6-dimethyl-1,4-phenylene ether) can be preferably used as the polyarylene ether.

The degree of polymerization of the unmodified polyarylene ether is not particularly limited and can be appropriately selected depending on the intended use and the like, and usually can be selected from the range of 60 to 400.

<Carbon Fiber>

Examples of the carbon fiber contained in the carbon member in the present embodiment include the same as those described in detail in the first embodiment. Although not particularly limited as in the first embodiment, it is preferably at least one carbon fiber selected from the group consisting of a PAN-based carbon fiber, a pitch-based carbon fiber, a thermosetting carbon fiber, a phenol-based carbon fiber, a vapor-grown carbon fiber, and a recycled carbon fiber (RCF).

As in the first embodiment, the shape of the carbon fibers is also not particularly limited, and carbon fibers having at least one shape selected from the group consisting of milled fibers, bundled and cut (chopped strands), short fibers, rovings, filaments, tows, whiskers, nanotubes, and the like can be used. Also, the form of the carbon fiber may be a single fiber or a fiber bundle, or both a single fiber and a fiber bundle may be mixed. The number of single fibers constituting each fiber bundle may be substantially uniform or may be different in each fiber bundle. The average fiber diameter of the carbon fiber varies depending on the form, for example, carbon fibers having an average fiber diameter of preferably 0.0004 to 15 $\mu$m, more preferably 3 to 15 $\mu$m, and still more preferably 5 to 10 $\mu$m can be used. The density of the carbon fibers is not particularly limited, but is preferably 1.75 to 1.95 g/cm$^3$.

As in the first embodiment, a sizing agent may be attached to the surface of the carbon fiber.

In the second embodiment of the present invention, the carbon member may be obtained from a step of preparing a carbon member containing an unmodified polyarylene ether and a carbon fiber, and a specific method for preparing the carbon member is not particularly limited.

The method of adding the unmodified polyarylene ether to the carbon fiber is not particularly limited. Examples thereof include a method in which the unmodified polyarylene ether is immersed in the carbon fiber in the presence of an appropriate solvent, a method in which the unmodified polyarylene ether powder is directly added to the carbon fiber, and a method in which the carbon fiber and the unmodified polyarylene ether are mixed and pressurized.

<Thermoplastic Resin>

The thermoplastic resin in the present embodiment is also not particularly limited, and examples thereof include the same resins as those described in detail in the first embodiment. Among these, at least one selected from the group consisting of a polycarbonate-based resin, a polystyrene-based resin, a polyamide, and a polyolefin is preferable, and a polyamide, a polycarbonate-based resin, or a polystyrene-based resin is more preferable. According to one aspect, the thermoplastic resin is a polystyrene-based resin or a polyamide.

The polystyrene-based resin is not particularly limited, and a preferred aspect thereof is the same as that of the first embodiment. Among them, syndiotactic polystyrene is similarly preferred. Details of the syndiotactic polystyrene are as described in the first embodiment.

The polyamide is also not particularly limited, and examples thereof include those described in the first embodiment. Among these, polyamide-6,6 is suitable also in the present embodiment.

In the second embodiment of the present invention, the unmodified polyarylene ether is contained in an amount of preferably 0.5 to 30% by mass, more preferably 0.8 to 15% by mass, and still more preferably 1.0 to 10% by mass based on 100% by mass of the total of the thermoplastic resin and the unmodified polyarylene ether. When the amount of the unmodified polyarylene ether is 0.5% by mass or more, excellent interfacial shear strength can be obtained. When the amount of the unmodified polyarylene ether is 30% by mass or less, the mechanical strength and heat resistance of a molded article to be obtained can be favorably maintained.

In the second embodiment of the present invention, the carbon fiber is contained in an amount of preferably 1 to 500 parts by mass, more preferably 1 to 400 parts by mass, still more preferably 1 to 350 parts by mass, yet still more preferably 1 to 200 parts by mass, even more preferably 1 to 100 parts by mass, and yet even more preferably 1 to 50 parts by mass with respect to 100 parts by mass of the total of the thermoplastic resin and the polyarylene ether not modified with a functional group. In order to obtain excellent bending strength, it is preferably contained in an amount of 15 parts by mass or more, more preferably 20 parts by mass or more, and still more preferably 40 parts by mass or more. When the amount of the carbon fiber is within the above range, the molded article or composite material obtained by the second embodiment of the present invention has excellent mechanical strength.

As described above, the resin composition according to the first embodiment of the present invention contains a resin (S) containing a polyarylene ether (A) modified with a functional group and a thermoplastic resin (B), and a carbon fiber (C). As defined above, the resin composition of the present invention may contain any of these components in any way. The method for producing a resin molded body according to the second embodiment of the present invention may include a step of preparing a carbon member containing an unmodified polyarylene ether and a carbon fiber and a step of adding a thermoplastic resin to the carbon member, and a specific method for preparing a carbon member is not limited.

Although not bound by a specific theory, in the first embodiment, the present inventors have found that a carbon fiber (C) and a thermoplastic resin (B), which are generally low in compatibility, exhibit high interfacial shear strength due to interposition of a polyarylene ether (A) modified with a functional group. When a glass fiber is used instead of a carbon fiber, an acid-modified polyarylene ether may be used as a compatibilizer because compatibility with a thermoplastic resin is increased by a reaction between a functional group (alkaline) on the surface of the glass fiber and the acid-modified polyarylene ether. On the other hand, since the surface of the carbon fiber has almost no functional group like that found in the glass fiber, it is thought that the high interfacial shear strength is exhibited by a mechanism different from the above. It is also surprising that the high interfacial shear strength between the resin (S) and the carbon fiber (C) is exhibited regardless of whether or not the carbon fiber (C) is treated with a sizing agent. Since the sizing agent has many functional groups, it generally tends to increase the affinity with the resin component, but the present inventors have found that the presence or absence of such functional groups does not affect the system of the present invention.
In the graph of Fig. 1, the horizontal axis represents the amount of polyarylene ether modified with a functional group, and the vertical axis represents the interfacial shear strength value calculated from the test by the micro-droplet method. "CF" indicates the behavior of the carbon fiber, and "GF" indicates the behavior of the glass fiber. The following can be seen from Fig. 1. In the glass fiber (GF), the interfacial shear strength is almost flat when the amount of polyarylene ether modified with a functional group is 2% by mass. On the other hand, in the carbon fiber (CF), the interfacial shear strength increases according to the amount of polyarylene ether modified with a functional group. From this fact as well, it is considered that the mechanism of exhibiting the interfacial shear strength is different from that of the glass fiber.
The above effect cannot be obtained with a polyarylene ether not modified with a functional group.
Also in the second embodiment of the present invention, it is noteworthy that the molded body (including the laminated body) obtained in this embodiment has high mechanical strength regardless of whether or not the carbon fiber is treated with the sizing agent. Although not bound by a specific theory and the detailed mechanism is unknown, as described above, since there is almost no functional group on the surface of the carbon fiber, it is considered that the molded body obtained by the production method of the present embodiment exhibits high mechanical strength by a mechanism different from that of the glass fiber.

<Other Components>

To the resin composition according to the first embodiment of the present invention or the carbon member or thermoplastic resin according to the second embodiment of the present invention, to the extent that the purpose of the present invention is not inhibited, other components such as commonly used rubber-like elastic materials, antioxidants, fillers other than the above-mentioned carbon fiber (C) or carbon fibers, crosslinking agents, crosslinking aids, nucleating agents, release agents, plasticizers, compatibilizers, colorants and/or antistatic agents can be added. Some of the other components are exemplified below.
As the rubber-like elastic materials, various materials can be used. Examples thereof include natural rubber, polybutadiene, polyisoprene, polyisobutylene, chloroprene rubber, polysulfide rubber, Thiokol rubber, acrylic rubber, urethane rubber, silicone rubber, epichlorohydrin rubber, a styrene-butadiene block copolymer (SBR), a hydrogenated styrene-butadiene block copolymer (SEB), a styrene-butadiene-styrene block copolymer (SBS), a hydrogenated styrene-butadiene-styrene block copolymer (SEBS), a styrene-isoprene block copolymer (SIR), a hydrogenated styrene-isoprene block copolymer (SEP), a styrene-isoprene-styrene block copolymer (SIS), a hydrogenated styrene-isoprene-styrene block copolymer (SEPS), a styrene-butadiene random copolymer, a hydrogenated styrene-butadiene random copolymer, a styrene-ethylene-propylene random copolymer, a styrene-ethylene-butylene random copolymer, ethylene-propylene rubber (EPR), ethylene-propylene-diene rubber (EPDM), and core-shell type particulate elastic materials such as acrylonitrile-butadiene-styrene core-shell rubber (ABS), methyl methacrylate-butadiene-styrene core-shell rubber (MBS), methyl methacrylate-butyl acrylate-styrene core-shell rubber (MAS), octyl acrylate-butadiene-styrene core-shell rubber (MABS), alkyl acrylate-butadiene-acrylonitrile-styrene core-shell rubber (AABS), butadiene-styrene core-shell rubber (SBR), and siloxane-containing core-shell rubbers including methyl methacrylate-butyl acrylate-siloxane, and rubbers obtained by modifying these materials.
Among these, particularly preferred are SBR, SBS, SEB, SEBS, SIR, SEP, SIS, SEPS, core-shell rubber, and rubbers obtained by modifying these rubbers, and the like.
Examples of the modified rubber-like elastic materials include rubbers obtained by modifying styrene-butyl acrylate copolymer rubber, a styrene-butadiene block copolymer (SBR), a hydrogenated styrene-butadiene block copolymer (SEB), a styrene-butadiene-styrene block copolymer (SBS), a hydrogenated styrene-butadiene-styrene block copolymer (SEBS), a styrene-isoprene block copolymer (SIR), a hydrogenated styrene-isoprene block copolymer (SEP), a styrene-isoprene-styrene block copolymer (SIS), a hydrogenated styrene-isoprene-styrene block copolymer (SEPS), a styrene-butadiene random copolymer, a hydrogenated styrene-butadiene random copolymer, a styrene-ethylene-propylene random copolymer, a styrene-ethylene-butylene random copolymer, ethylene-propylene rubber (EPR), ethylene-propylene-diene rubber (EPDM), etc. with a modifier having a polar group.

As the filler, in addition to the carbon fiber (C) or carbon fibers, an organic filler can also be added. Examples of the organic filler include organic synthetic fibers and natural plant fibers. Specific examples of the organic synthetic fibers include wholly aromatic polyamide fibers and polyimide fibers. The organic filler may be used alone or in combination of two or more kinds thereof. The addition amount thereof is preferably 1 to 350 parts by mass, and more preferably 5 to 200 parts by mass with respect to 100 parts by mass of the resin (S) or 100 parts by mass of the total of the unmodified polyarylene ether and the thermoplastic resin. When the amount is 1 part by mass or more, the effect of the filler can be sufficiently obtained, and when the amount is 350 parts by mass or less, dispersibility is not inferior and moldability is not adversely affected.

As the antioxidant, there are various antioxidants, but particularly preferred are phosphorus-based antioxidants such as monophosphites and diphosphites such as tris(2,4-di-tert-butylphenyl)phosphite and tris(mono- and di-nonylphenyl)phosphite, and phenol-based antioxidants.

As the diphosphite, it is preferable to use a phosphorus-based compound represented by the general formula:

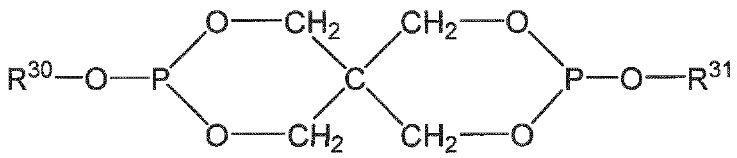

(in the formula, $R^{30}$ and $R^{31}$ each independently represent an alkyl group having 1 to 20 carbon atoms, a cycloalkyl group having 3 to 20 carbon atoms, or an aryl group having 6 to 20 carbon atoms).

Specific examples of the phosphorus-based compound represented by the above general formula include distearyl pentaerythritol diphosphite; dioctyl pentaerythritol diphosphite; diphenyl pentaerythritol diphosphite; bis(2,4-di-tert-butylphenyl) pentaerythritol diphosphite; bis(2,6-di-tert-butyl-4-methylphenyl) pentaerythritol diphosphite; and dicyclohexyl pentaerythritol diphosphite.

As the phenol-based antioxidant, known antioxidants can be used, and specific examples thereof include 2,6-di-tert-butyl-4-methylphenol; 2,6-diphenyl-4-methoxyphenol;

2,2'-methylenebis(6-tert-butyl-4-methylphenol);
2,2'-methylenebis-(6-tert-butyl-4-methylphenol);
2,2'-methylenebis[4-methyl-6-(α-methylcyclohexyl)phenol];
1,1-bis(5-tert-butyl-4-hydroxy-2-methylphenyl)butane;
2,2'-methylenebis(4-methyl-6-cyclohexylphenol);
2,2'-methylenebis(4-methyl-6-nonylphenol);
1,1,3-tris(5-tert-butyl-4-hydroxy-2-methylphenyl)butane;
2,2-bis(5 -tert-butyl-4-hydroxy-2-methylphenyl)-4-n-dodecylmercaptobutane; ethylene glycol-bis[3,3-bis(3-tert-butyl-4-hydroxyphenyl)butyrate];
1,1-bis(3,5-dimethyl-2-hydroxyphenyl)-3-(n-dodecylthio)-butane;
4,4'-thiobis(6-tert-butyl-3-methylphenol);
1,3,5-tris(3,5-di-tert-butyl-4-hydroxybenzyl)-2,4,6-trimethylbenzene;
2,2-bis(3,5-di-tert-butyl-4-hydroxybenzyl)-malonic acid dioctadecyl ester;
n-octadecyl-3-(4-hydroxy-3,5-di-tert-butylphenyl)propionate; and
tetrakis[methylene(3,5-di-tert-butyl-4-hydroxyhydrocinnamate)]methane.

In addition to the above-described phosphorus-based antioxidant and phenol-based antioxidant, amine-based antioxidants, sulfur-based antioxidants, and the like can be used alone or as a mixture of two or more thereof.

The amount of the antioxidant is usually 0.005 parts by mass or more and 5 parts by mass or less with respect to 100 parts by mass of the resin (S) or 100 parts by mass of the total of the unmodified polyarylene ether and the thermoplastic resin. When the blending amount of the antioxidant is 0.005 parts by mass or more, a decrease in the molecular weight of the thermoplastic resin (A) or the thermoplastic resin can be suppressed. When the amount is 5 parts by mass or less, the mechanical strength can be favorably maintained. When a plurality of antioxidants are contained in the composition as the antioxidant, it is preferable to adjust the total amount so as to fall within the above range. The blending amount of the antioxidant is more preferably 0.01 to 4 parts by mass, and still more preferably 0.02 to 3 parts by mass with respect to 100 parts by mass of the resin (S) or 100 parts by mass of the total of the unmodified polyarylene ether and the thermoplastic resin.

As the nucleating agent, any of the known nucleating agents such as metal salts of carboxylic acid such as aluminum di(p-tert-butylbenzoate), metal salts of phosphoric acid such as sodium methylenebis(2,4-di-tert-butylphenol) acid phosphate, talc, and phthalocyanine derivatives can be selected and used as desired. Specific examples of the

trade name include ADK STAB NA-10, ADK STAB NA-11, ADK STAB NA-21, ADK STAB NA-30, ADK STAB NA-35, and ADK STAB NA-70 manufactured by Adeka Corporation, and PTBBA-AL manufactured by DIC Corporation. These nucleating agents may be used alone or in combination of two or more thereof. The blending amount of the nucleating agent is not particularly limited, but is preferably 0.01 to 5 parts by mass, and more preferably 0.04 to 2 parts by mass with respect to 100 parts by mass of the resin (S) or 100 parts by mass of the total of the unmodified polyarylene ether and the thermoplastic resin.

As the release agent, any of the known release agents such as polyethylene wax, silicone oil, long chain carboxylic acid, and long chain carboxylic acid metal salt can be selected and used as desired. These release agents may be used alone or in combination of two or more thereof. The blending amount of the release agent is not particularly limited, but is preferably 0.1 to 3 parts by mass, and more preferably 0.2 to 1 part by mass with respect to 100 parts by mass of the resin composition or 100 parts by mass of the total of the resin molding body material.

<Resin Composition>

A method for preparing the resin composition of the present invention is not particularly limited, and may be mixing using a known mixer, or may be melt-kneading using an extruder or the like. A molten resin may be immersed in a member containing carbon fibers. For example, injection molding can be performed by molding a composition to which the resin (S), the carbon fiber (C), and if necessary, the various components described above are added. In injection molding, molding may be performed using a mold having a predetermined shape, and in extrusion molding, a film and a sheet may be T-die-molded, and the obtained film and sheet may be heated and melted and then extruded into a predetermined shape.

It is preferable to use a method in which carbon fibers are side-fed using a twin-screw kneader or a so-called long fiber pellet production method in which carbon fiber rovings are immersed in a molten resin, subjected to pultrusion molding, and then cut to a desired pellet length, because breakage of carbon fibers can be suppressed. The resin composition can also be press-molded, and known methods such as a cold press method and a hot press method can be used.

When the resin (S) is immersed in a member containing the carbon fibers (C) to obtain a composite member, specifically, a solution of the resin (S) is immersed in the member containing the carbon fibers (C) (woven fabric, non-woven fabric, UD material, or the like). The member into which the resin is immersed may be a single sheet or a laminated body in which two or more sheets are laminated.

The resin composition of the present invention is a carbon fiber composite material (CFRTP) containing the resin (S) and the carbon fiber (C) and having the thermoplastic resin as a matrix. As described above, the mechanism is not specified, but it has a high interfacial shear strength between the resin (S) and the carbon fiber (C). The interfacial shear strength can be evaluated by, for example, a "micro-droplet method".

The "micro-droplet method" is a method for evaluating the interfacial adhesion between a single fiber and a resin by adhering resin particles (droplets) to the single fiber, fixing the droplets, and then performing a pultruding test of the single fiber from the droplets. In the micro-droplet method, the interfacial shear strength is calculated from the following equation.

$$\tau = F/(\pi DL)$$

In the formula, $\tau$ is the interfacial shear strength, F is the maximum pultruding load, L is the length of a single fiber embedded in the droplet, and D is the fiber diameter.

The resin composition of the present invention has high interfacial shear strength regardless of whether or not the carbon fiber (C) is subjected to sizing treatment. For example, when syndiotactic polystyrene is used as the thermoplastic resin (B) and a fumaric acid-modified polyarylene ether is used as the polyarylene ether (A) modified with a functional group, and a test is performed by a micro-droplet method under conditions of a pultruding rate of 0.12 mm/min and a maximum load of 1 N on a load cell, the resin composition has an interfacial shear strength of preferably 20 MPa or more, and more preferably 23 MPa or more. The test by the micro-droplet method is performed 20 to 30 times, and the average value of the interfacial shear strength obtained as a result is calculated. Specifically, the test by the micro-droplet method under the above conditions can be performed by using an evaluation equipment for interfacial property of composite material, MODEL HM410 manufactured by Tohei Sangyo Co., Ltd. Since the resin composition of the present invention is also excellent in moldability, it is suitable for various applications such as automobile members, specifically, application to large-sized molded articles.

<Method for Producing Resin Molded Body>

As described above, the molded body of the resin composition according to the first embodiment of the present invention can be obtained by molding the composition by mixing, melt-kneading, or immersing the resin (S) and the carbon fiber (C). As another method, the molded body can also be molded by a method including a step of preparing a carbon member containing the polyarylene ether (A) modified with a functional group and the carbon fiber (C), and a step of adding the thermoplastic resin (B) to the carbon member.

Means for preparing a carbon member containing the polyarylene ether (A) modified with a functional group and the carbon fiber (C) is not particularly limited. Examples thereof include a method in which a polyarylene ether modified with a functional group is immersed in a carbon fiber in an appropriate solvent, a method in which a mixture obtained by mixing the polyarylene ether (A) with an appropriate vehicle is applied to a carbon fiber, and a method in which the polyarylene ether (A) modified with a functional group is mixed with a sizing material and added to a carbon fiber. When this method is used, examples of the form of the carbon fiber (C) include at least one form selected from chopped strands, woven fabrics, non-woven fabrics, and unidirectional materials.

The thermoplastic resin (B) is added to the carbon member obtained by the above step in a subsequent step. A method of adding the thermoplastic resin (B) to the carbon member is not limited, and the thermoplastic resin (B) may be in a solution state or a molten state. Specific examples thereof include a method in which the thermoplastic resin (B) is immersed in a carbon member in an appropriate solvent, a method in which a film containing the thermoplastic resin (B) is laminated and subjected to melt pressing, and a method in which powder of the thermoplastic resin (B) is directly added to a carbon member and then added by melting.

As long as the carbon member contains the polyarylene ether (A) modified with a functional group and the carbon fiber (C), the thermoplastic resin (B) may be added in the form of a woven fabric, a non-woven fabric, or a unidirectional material, or the thermoplastic resin (B) may be added after a carbon member in the form of a woven fabric or the like is cut into short pieces to obtain a chopped form. After adding the thermoplastic resin (B) to a carbon member, a molded body can be produced by various molding methods described later.

According to the second embodiment of the present invention, a molded body can be produced by a method including a step of preparing a carbon member containing an unmodified polyarylene ether and a carbon fiber and a step of adding a thermoplastic resin to the carbon member.

A method for preparing a carbon member containing an unmodified polyarylene ether and a carbon fiber is the same as the method for preparing the carbon member of the first embodiment described above. Also, as a method of adding a thermoplastic resin to the carbon member obtained in this step, the same method as in the first embodiment can be exemplified. Examples of the form of the carbon fibers include at least one form selected from a woven fabric, a non-woven fabric, and a unidirectional material. After adding the thermoplastic resin to the carbon member, a molded body can be produced by various molding methods described above.

<Molded Body>

The shape of the molded body containing the resin composition according to the first embodiment of the present invention or the molded body obtained by the production method according to the second embodiment of the present invention is not particularly limited, and examples thereof include a sheet, a film, a fiber, a woven fabric, a non-woven fabric, a unidirectional material (UD material), a vessel, an injection molded article, and a blow-molded body. The molded body containing the resin composition of the present invention may be an injection molded body as described above. Depending on the form of the carbon fibers used, the molded body may be a molded body including a unidirectional fiber reinforcement or at least one member selected from woven carbon fibers and non-woven carbon fibers. A plurality of the molded bodies may be laminated to form a laminated body. This laminated body is also included in the "molded body" in the description herein.

The molded body including at least one member selected from the group consisting of the unidirectional fiber reinforcement, the woven carbon fiber, and the non-woven carbon fiber of the present invention has high mechanical strength. For example, it has a mechanical strength such that the bending strength measured in accordance with ISO 178:2010 at an inter-fulcrum distance of 4 cm, a test speed of 2 mm/min, and a temperature of 23°C is 250 MPa or more, and more preferably 300 MPa or more.

The molded body formed by molding the resin composition according to the first embodiment of the present invention or the molded body obtained by the production method according to the second embodiment of the present invention is suitable as industrial materials such as electric and electronic materials (connectors, printed circuit boards, etc.), industrial structural materials, automobile parts (connectors for mounting on vehicles, wheel caps, cylinder head covers, etc.), home electric appliances, various machine parts, pipes, sheets, trays, films, etc.

Specifically, the molded body containing the resin composition according to the first embodiment of the present invention or the molded body obtained by the production method according to the second embodiment of the present

invention can be used as a thermoplastic carbon fiber reinforced plastic (CFRTP) in a wide range of applications such as automobile/aircraft/sporting goods for which further weight reduction is required. The molded body for this use can also be applied to improvement of engineering plastics for which resistance under a high-load environment such as a high load and a high temperature is required. The molded body containing the resin composition according to the first embodiment of the present invention or the molded body obtained by the production method according to the second embodiment of the present invention has a short molding time, excellent recyclability, easy resin immersion during molding, and sufficient mechanical strength, and thus can be practically used in a wide range of applications.

Specific examples thereof include automobile applications, two wheeled vehicles/bicycles applications, water heaters and EcoCute-related applications, home electric appliances/electronic devices applications, building materials applications, and daily necessities applications.

Examples of automobile applications include sliding parts such as gears, panel members for automobiles, millimeter-wave radomes, IGBT housings, radiator grills, meter hoods, fender supports, front engine covers, front strut tower panels, transmission center tunnels, radiator core supports, front dashes, door inners, rear luggage back panels, rear luggage side panels, rear luggage floors, rear luggage partitions, roofs, door frame pillars, seat backs, headrest supports, engine parts, crash boxes, front floor tunnels, front floor panels, undercovers, undersupport rods, impact beams, front cowls, and front strut tower bars.

The molded body containing the resin composition according to the first embodiment of the present invention or the molded body obtained by the production method according to the second embodiment of the present invention can suitably constitute, for example, a power electronic unit, a plug for rapid charging, an in-vehicle charger, a lithium ion battery, a battery control unit, a power electronic control unit, a three phase synchronous motor, a plug for home charging, and the like.

The molded body containing the resin composition according to the first embodiment of the present invention or the molded body obtained by the production method according to the second embodiment of the present invention may further suitably constitute, for example, a solar twilight sensor, alternator, EDU (electronic injector driver unit), electronic throttle, tumble control valve, throttle opening sensor, radiator fan controller, stick coil, A/C pipe joint, diesel particulate collecting filter, headlight reflector, charge air duct, charge air cooling head, intake air temperature sensor, gasoline fuel pressure sensor, cam/crank position sensor, combination valve, engine oil pressure sensor, transmission gear angle sensor, continuously variable transmission oil pressure sensor, ELCM (evaporation leak check module) pump, water pump impeller, steering roll connector, ECU (engine computer unit) connector, ABS (anti-lock brake system) reservoir piston, actuator cover, etc.

The molded body containing the resin composition according to the first embodiment of the present invention or the molded body obtained by the production method according to the second embodiment of the present invention is also suitably used as, for example, a sealing material for sealing a sensor included in an in-vehicle sensor module. Specific examples of the sensor include, but are not limited to, an atmospheric pressure sensor (e.g., for highland correction), a boost pressure sensor (e.g., for fuel injection control), an integrated atmospheric pressure sensors (IC), an acceleration sensor (e.g., for airbag), a gauge pressure sensor (e.g., for seat condition control), a tank internal pressure sensor (e.g., for fuel tank leak detection), a refrigerant pressure sensor (e.g., for air conditioner control), a coil driver (e.g., for ignition coil control), an EGR (exhaust gas recirculation) valve sensor, an air flow sensor (e.g., for fuel injection control), a manifold air pressure (MAP) sensor (e.g., for fuel injection control), an oil pan, a radiator cap, and an intake manifold.

The molded body containing the resin composition according to the first embodiment of the present invention or the molded body obtained by the production method according to the second embodiment of the present invention is not limited to the automobile parts exemplified above, and is suitably used for, for example, high-voltage (harness) connectors, millimeter wave radomes, IGBT (insulated gate bipolar transistor) housings, battery fuse terminals, radiator grills, meter hoods, inverter cooling water pumps, battery monitoring units, structural parts, intake manifolds, high-voltage connectors, motor control ECUs (engine computer units), inverters, piping parts, canister purge valves, power units, bus bars, motor reducers, canisters, and the like.

The molded body containing the resin composition according to the first embodiment of the present invention or the molded body obtained by the production method according to the second embodiment of the present invention is suitably used for two wheeled vehicle parts and bicycle parts, and more specifically, a member for a motorcycle, a cowl for a two wheeled vehicle, a member for a bicycle, and the like are exemplified. Examples of applications for two wheeled vehicles/bicycles include members for motorcycles, cowls for two wheeled vehicles, and members for bicycles.

The molded body containing the resin composition according to the first embodiment of the present invention or the molded body obtained by the production method according to the second embodiment of the present invention has excellent chemical resistance, and thus can be used for various electric appliances. For example, it is also preferable to constitute a component of a water heater, specifically, a natural refrigerant heat pump water heater known as so-called "EcoCute (registered trademark)" or the like. Examples of the component include a shower component, a pump component, and a piping component, and more specifically include a one port circulation connection fitting, a relief valve,

a mixing valve unit, a heat-resistant trap, a pump casing, a composite water valve, a water inlet fitting, a resin joint, a piping component, a resin pressure reducing valve, and an elbow for a water tap faucet.

The molded body containing the resin composition according to the first embodiment of the present invention or the molded body obtained by the production method according to the second embodiment of the present invention can be suitably used for home electric appliances and electronic devices, and more specifically, structural members such as telephones, cellular phones, microwave ovens, refrigerators, vacuum cleaners, office automation equipment, power tool parts, electrical component applications, anti-static applications, high-frequency electronic components, highly heat-dissipating electronic components, high-voltage components, electromagnetic wave shielding components, communication equipment products, AV equipment, personal computers, registers, fans, ventilation fans, sewing machines, ink peripheral components, ribbon cassettes, air cleaner components, warm-water washing toilet seat components, toilet seats, toilet lids, rice cooker components, optical pickup devices, lighting equipment components, DVDs, DVD-RAMs, DVD pickup components, DVD pickup bases, switch components, sockets, displays, video cameras, filaments, plugs, high-speed color copying machines (laser printers), inverters, air-conditioners, keyboards, converters, televisions, facsimiles, optical connectors, semiconductor chips, LED components, washing machine and washing dryer components, and dishwasher and dish dryer components can be exemplified.

The molded body containing the resin composition according to the first embodiment of the present invention or the molded body obtained by the production method according to the second embodiment of the present invention is suitably used for building materials, and more specifically, structural members such as exterior wall panels, back panels, partition wall panels, signal lamps, emergency lamps, and wall materials can be exemplified.

The molded body containing the resin composition according to the first embodiment of the present invention or the molded body obtained by the production method according to the second embodiment of the present invention can be suitably used for general goods, daily necessities and the like, and more specifically, structural members such as chopsticks, lunch boxes, tableware containers, food trays, food packaging materials, water tanks, tanks, toys, sports goods, surfboards, door caps, door steps, pachinko machine parts, remote control cars, remote control cases, stationeries, musical instruments, tumblers, dumbbells, helmet box products, shutter blade members for use in cameras and the like, racket members for table tennis, tennis and the like, and plate members for skiing, snowboarding and the like can be exemplified.

Each of the various components described above can be partially or entirely constituted by the molded body containing the resin composition according to the first embodiment of the present invention or the molded body obtained by the production method according to the second embodiment of the present invention.

## EXAMPLES

The present invention will be described in more detail with reference to Examples, but the present invention is not limited thereto.

### Production Example 1

100 parts by mass of polyarylene ether [LXR040 manufactured by BLUESTAR NEW CHEMICAL MATERIALS Co., Ltd.; poly(2,6-dimethyl-1,4-phenyl ether)], 4 parts by mass of a radical generator (NOFMER BC90 manufactured by NOF Corporation; 2,3-dimethyl-2,3-diphenylbutane), and 1 part by mass of a modifier (fumaric acid) were dry blended and melt kneaded using a twin-screw kneader (ZSK 32 MC manufactured by Coperion GmbH) having a cylinder diameter of 32 mm at a screw rotation speed of 200 rpm and a set temperature of 300°C. The resin temperature at this time was about 330°C.

The strand was cooled and then pelletized to obtain a fumaric acid-modified polyarylene ether. In order to measure the degree of modification (amount of modification), the amount of modification was determined as the acid content from the neutralization titration measured in accordance with JIS K 0070-1992. The amount of modification was 1.60% by mass.

### Production Example 2

Pellets were prepared under the same conditions as in Production Example 1 except that the amount of the modifying agent was 2 parts by mass, and the amount of modification was also measured. The amount of modification of the polyarylene ether modified with a functional group was 1.74% by mass.

### Production Example 3

Pellets were prepared under the same conditions as in Production Example 1 except that the amount of the

modifying agent was 3 parts by mass, and the amount of modification was also measured. The amount of modification of the polyarylene ether modified with a functional group was 2.05% by mass.

<Micro-Droplet Test>

In order to evaluate the interfacial shear strength between the resin and the carbon fiber in the resin composition, the following test by the micro-droplet method was performed.

The polyarylene ether modified with a functional group obtained in Production Examples 1 to 3 or a fumaric acid-modified polyphenylene ether (CX-1 manufactured by Idemitsu Kosan Co., Ltd.) described later and syndiotactic polystyrene (XAREC 300ZC manufactured by Idemitsu Kosan Co., Ltd.; MFR = 30 g/10 min) were mixed using a twin-screw kneader (ZSK 32 MC manufactured by Coperion GmbH) having a cylinder diameter of 32 mm to obtain a resin (S). The interfacial shear strength between the obtained resin (S) and the carbon fiber (C) was measured using a micro-droplet method. Hereinafter, syndiotactic polystyrene may be abbreviated as "SPS".

The test by the micro-droplet method was performed using MODEL HM410 manufactured by Tohei Sangyo Co., Ltd. in a nitrogen atmosphere at a droplet preparation temperature of 270°C, a pultruding rate of 0.12 mm/min, and a maximum load of 1 N on a load cell. The test was performed 20 times, and the interfacial shear strength was determined from the average value thereof.

<MFR>

The melt flow rate (MFR) of the resins used in Examples and Comparative Examples was measured in accordance with JIS K 7210-1:2014 at a measurement temperature of 300°C and a load of 2.16 kg. The unit is g/10 min.

Comparative Example 1

With respect to 100 parts by mass of a resin composed of 100% by mass of SPS (XAREC 300ZC manufactured by Idemitsu Kosan Co., Ltd.; MFR: 30 g/10 min), 30 parts by mass of a carbon fiber (TR 50S 15L manufactured by Mitsubishi Chemical Corporation; filament diameter: 7 μm) were side-fed and kneaded using a twin-screw kneader (ZSK 32 MC manufactured by Coperion GmbH) with a cylinder diameter of 32 mm to obtain a composition.

In order to measure the interfacial shear strength between the resin and the carbon fiber constituting the composition, the above-described micro-droplet test was performed. To be more specific, 100% by mass of the SPS was kneaded with a twin-screw kneader, and then the interfacial shear strength between the resin and the carbon fiber was measured by a micro-droplet method. As shown in Table 1, the interfacial shear strength was 18 MPa.

Example 1

With respect to 100 parts by mass of a resin composed of 99% by mass of SPS (XAREC 300ZC manufactured by Idemitsu Kosan Co., Ltd.; MFR: 30 g/10 min) and 1% by mass of the polyarylene ether modified with a functional group obtained in Production Example 1 (amount of modification: 1.60% by mass), 30 parts by mass of a carbon fiber (TR 50S 15L manufactured by Mitsubishi Chemical Corporation; filament diameter: 7 μm) were side-fed and kneaded using a twin-screw kneader (ZSK 32 MC manufactured by Coperion GmbH) with a cylinder diameter of 32 mm to obtain a composition.

In order to measure the interfacial shear strength between the resin and the carbon fiber constituting the composition, the above-described micro-droplet test was performed.

To be more specific, 99% by mass of the SPS and 1% by mass of the polyarylene ether modified with a functional group obtained in Production Example 1 were kneaded with the twin-screw kneader, and then the interfacial shear strength between the resin and the carbon fiber was measured by a micro-droplet method. As shown in Table 1, the interfacial shear strength was 23 MPa.

Example 2

A composition was obtained in the same manner as in Example 1 except that the amount of the SPS was changed to 95% by mass and the amount of the polyarylene ether modified with a functional group (Production Example 1) was changed to 5% by mass. The interfacial shear strength between the resin and the carbon fiber constituting the composition was measured in the same manner as in Example 1. As shown in Table 1, the interfacial shear strength was 30 MPa.

Example 3

With respect to 100 parts by mass of a resin composed of 99% by mass of SPS (XAREC 300ZC manufactured by Idemitsu Kosan Co., Ltd.; MFR: 30 g/10 min) and 1% by mass of the polyarylene ether modified with a functional group obtained in Production Example 2 (amount of modification: 1.74% by mass), 30 parts by mass of a carbon fiber (TR 50S 15L manufactured by Mitsubishi Chemical Corporation; filament diameter: 7 μm) were side-fed and kneaded using a twin-screw kneader (ZSK 32 MC manufactured by Coperion GmbH) with a cylinder diameter of 32 mm to obtain a composition.

In order to measure the interfacial shear strength between the resin and the carbon fiber constituting the composition, the above-described micro-droplet test was performed. To be more specific, 99% by mass of the SPS and 1% by mass of the polyarylene ether modified with a functional group obtained in Production Example 2 were kneaded with the twin-screw kneader, and then the interfacial shear strength between the resin and the carbon fiber was measured by a micro-droplet method. As shown in Table 1, the interfacial shear strength was 24 MPa.

Example 4

A composition was obtained in the same manner as in Example 3 except that the amount of the SPS was changed to 95% by mass and the amount of the polyarylene ether modified with a functional group (Production Example 2) was changed to 5% by mass. The interfacial shear strength between the resin and the carbon fiber constituting the composition was measured in the same manner as in Example 3. As shown in Table 1, the interfacial shear strength was 31 MPa.

Example 5

With respect to 100 parts by mass of a resin composed of 99% by mass of SPS (XAREC 300ZC manufactured by Idemitsu Kosan Co., Ltd.; MFR: 30 g/10 min) and 1% by mass of the polyarylene ether modified with a functional group obtained in Production Example 3 (amount of modification: 2.05% by mass), 30 parts by mass of a carbon fiber (TR 50S 15L manufactured by Mitsubishi Chemical Corporation; filament diameter: 7 μm) were side-fed and kneaded using a twin-screw kneader (ZSK 32 MC manufactured by Coperion GmbH) with a cylinder diameter of 32 mm to obtain a composition.

In order to measure the interfacial shear strength between the resin and the carbon fiber constituting the composition, the above-described micro-droplet test was performed. To be more specific, 99% by mass of the SPS and 1% by mass of the polyarylene ether modified with a functional group obtained in Production Example 3 were kneaded with the twin-screw kneader, and then the interfacial shear strength between the resin and the carbon fiber was measured by a micro-droplet method. As shown in Table 1, the interfacial shear strength was 23 MPa.

Example 6

A composition was obtained in the same manner as in Example 5 except that the amount of the SPS was changed to 95% by mass and the amount of the polyarylene ether modified with a functional group (Production Example 3) was changed to 5% by mass. The interfacial shear strength between the resin and the carbon fiber constituting the composition was measured in the same manner as in Example 5. As shown in Table 1, the interfacial shear strength was 32 MPa.

Comparative Example 2

With respect to 100 parts by mass of a resin composed of 99% by mass of SPS (XAREC 300ZC manufactured by Idemitsu Kosan Co., Ltd.; MFR: 30 g/10 min) and 1% by mass of a polyarylene ether not modified with a functional group (LXR040 manufactured by BLUESTAR NEW CHEMICAL MATERIALS Co., Ltd.; polyphenylene ether), 30 parts by mass of a carbon fiber (TR 50S 15L manufactured by Mitsubishi Chemical Corporation; filament diameter: 7 μm) were side-fed and kneaded using a twin-screw kneader (ZSK 32 MC manufactured by Coperion GmbH) with a cylinder diameter of 32 mm to obtain a composition.

In order to measure the interfacial shear strength between the resin and the carbon fiber constituting the composition, the above-described micro-droplet test was performed. To be more specific, 99% by mass of the SPS and 1% by mass of the polyarylene ether not modified with a functional group were kneaded with the twin-screw kneader, and then the interfacial shear strength between the resin and the carbon fiber was measured by a micro-droplet method. As shown in Table 1, the interfacial shear strength was 17 MPa.

Comparative Example 3

A composition was obtained in the same manner as in Comparative Example 2 except that the amount of the SPS was changed to 95% by mass and the amount of the polyarylene ether not modified with a functional group was changed to 5% by mass. The interfacial shear strength between the resin and the carbon fiber constituting the composition was measured in the same manner as in Comparative Example 2. As shown in Table 1, the interfacial shear strength was 18 MPa.

Example 7

With respect to 100 parts by mass of a resin composed of 99% by mass of SPS (XAREC 300ZC manufactured by Idemitsu Kosan Co., Ltd.; MFR: 30 g/10 min) and 1% by mass of a fumaric acid-modified polyphenylene ether (CX-1 manufactured by Idemitsu Kosan Co., Ltd.; amount of modification: 1.7% by mass), 30 parts by mass of a carbon fiber (TR 50S 15L manufactured by Mitsubishi Chemical Corporation; filament diameter: 7 μm) were side-fed and kneaded using a twin-screw kneader (ZSK 32 MC manufactured by Coperion GmbH) with a cylinder diameter of 32 mm to obtain a composition. In order to measure the interfacial shear strength between the resin and the carbon fiber constituting the composition, the above-described micro-droplet test was performed. To be more specific, 99% by mass of the SPS and 1 % by mass of the fumaric acid-modified polyphenylene ether were kneaded with the twin-screw kneader, and then the interfacial shear strength between the resin and the carbon fiber was measured by a micro-droplet method. As shown in Table 1, the interfacial shear strength was 21 MPa.

Example 8

A composition was obtained in the same manner as in Example 7 except that the amount of the SPS was changed to 97.5% by mass and the amount of the fumaric acid-modified PPE was changed to 2.5% by mass. The interfacial shear strength between the resin and the carbon fiber constituting the composition was measured in the same manner as in Example 7. As shown in Table 1, the interfacial shear strength was 25 MPa.

Example 9

A composition was obtained in the same manner as in Example 7 except that the amount of the SPS was changed to 95% by mass and the amount of the fumaric acid-modified PPE was changed to 5% by mass. The interfacial shear strength between the resin and the carbon fiber constituting the composition was measured in the same manner as in Example 7. As shown in Table 1, the interfacial shear strength was 30 MPa.

Example 10

A composition was obtained in the same manner as in Example 7 except that the amount of the SPS was changed to 90% by mass and the amount of the fumaric acid-modified PPE was changed to 10% by mass. The interfacial shear strength between the resin and the carbon fiber constituting the composition was measured in the same manner as in Example 7. As shown in Table 1, the interfacial shear strength was 39 MPa.

Example 11

A composition was obtained in the same manner as in Example 7 except that the amount of the SPS was changed to 90% by mass, the amount of the fumaric acid-modified PPE was changed to 10% by mass, and the carbon fiber from which a sizing agent was removed (desized) was used. The interfacial shear strength between the resin and the carbon fiber constituting the composition was measured in the same manner as in Example 7. As shown in Table 1, the interfacial shear strength was 40 MPa. Sizing removal of the carbon fiber was performed by acetone washing.

Example 12

With respect to 100 parts by mass of a resin composed of 98% by mass of SPS (XAREC 130ZC manufactured by Idemitsu Kosan Co., Ltd.; MFR: 15 g/10 min) and 2% by mass of fumaric acid-modified PPE (CX-1 manufactured by Idemitsu Kosan Co., Ltd.; amount of modification: 1.7% by mass), 30 parts by mass of a carbon fiber (TR06UB4E manufactured by Mitsubishi Chemical Corporation; chopped carbon fiber) were side-fed and kneaded using a twin-screw kneader (ZSK 32 MC manufactured by Coperion GmbH) with a cylinder diameter of 32 mm. The obtained pellets were injection-molded using an injection molding machine (MD100 manufactured by Niigata Machine Techno Co., Ltd.) under

the conditions of a cylinder temperature of 290°C and a mold temperature of 80°C to obtain a test piece. An ISO mold was used as the mold.

The tensile strength (MPa) of the test piece was measured by performing a tensile test using a tensile tester (manufactured by Shimadzu Corporation, trade name: Autograph AG5000B) in accordance with ISO 527-1:2012 (2nd edition) under room temperature conditions of an initial chuck-to-chuck spacing of 100 mm and a tensile speed of 5 mm/min. As shown in Table 1, the tensile strength was 79 MPa.

Example 13

The tensile strength of a test piece obtained after injection molding was measured in the same manner as in Example 12 except that the amount of the SPS was changed to 96% by mass and the amount of the fumaric acid-modified PPE was changed to 4% by mass. As shown in Table 1, the tensile strength was 91 MPa.

Example 14

The tensile strength of a test piece obtained after injection molding was measured in the same manner as in Example 12 except that the amount of the SPS was changed to 92% by mass and the amount of the fumaric acid-modified PPE was changed to 8% by mass. As shown in Table 1, the tensile strength was 118 MPa.

Table 1

| | Resin (S) (100 parts by mass) | | | | | | | | | Evaluation results | |
|---|---|---|---|---|---|---|---|---|---|---|---|
| | Thermoplastic resin (B) | | Modified polyarylene ether (A) | | | | Unmodified PAE | Carbon fiber (C) | | Interfacial shear strength | Tensile strength |
| | SPS 300ZC | SPS 130ZC | Production Example 1 | Production Example 2 | Example 3 | CX-1 | PAE | | | | |
| | (% by mass) | (% by mass) | (% by mass) | (% by mass) | (% by mass) | (% by mass) | (% by mass) | (part by mass) | Surface state | (MPa) | (MPa) |
| Comp. Ex. 1 | 100 | - | 0 | 0 | 0 | 0 | 0 | - | Urethane-based sizing agent treatment | 18 | - |
| Ex. 1 | 99 | - | 1 | - | - | - | - | - | | 23 | - |
| Ex. 2 | 95 | - | 5 | - | - | - | - | - | | 30 | - |
| Ex. 3 | 99 | - | - | 1 | - | - | - | - | | 24 | - |
| Ex. 4 | 95 | - | - | 5 | - | - | - | - | | 31 | - |
| Ex. 5 | 99 | | - | - | 1 | - | - | | | 23 | |
| Ex. 6 | 95 | - | - | - | 5 | - | - | - | | 32 | - |
| Comp. Ex. 2 | 99 | - | - | - | - | - | 1 | - | | 17 | - |
| Comp. Ex. 3 | 95 | - | - | - | - | - | 5 | - | | 18 | - |
| Ex. 7 | 99 | - | - | - | - | 1 | - | - | | 21 | - |
| Ex. 8 | 97.5 | - | - | - | - | 2.5 | - | - | | 25 | - |
| Ex. 9 | 95 | - | - | - | - | 5 | - | - | | 30 | - |
| Ex. 10 | 90 | - | - | - | - | 10 | - | - | | 39 | - |
| Ex. 11 | 90 | - | - | - | - | 10 | - | - | Desizing treatment | 40 | - |
| Ex. 12 | - | 98 | - | - | - | 2 | - | 30 | Urethane-based sizing agent treatment | - | 79 |
| Ex. 13 | - | 96 | - | - | - | 4 | - | 30 | | - | 91 |
| Ex. 14 | - | 92 | - | - | - | 8 | - | 30 | | - | 118 |

It can be seen that Examples having the composition of the present invention have high interfacial shear strength and are excellent in mechanical properties because the interfacial shear strength between the resin and the carbon fiber is high. From Comparative Example 1 containing no polyarylene ether and Comparative Examples 2 and 3 containing the polyarylene ether not modified with a functional group, it is found that high interfacial shear strength is not exhibited in the absence of the polyarylene ether (A) modified with a functional group. From the results of Examples 10 and 11, it can be seen that high interfacial shear strength is provided at the interface between the resin and the carbon fiber without being affected by the presence or absence of the sizing agent on the surface of the carbon fiber.

From Examples 12 to 14, it is found that the molded body containing the composition of the present invention has high mechanical properties.

Example 15

With respect to 100 parts by mass of a resin composed of 95% by mass of SPS (XAREC 300ZC manufactured by Idemitsu Kosan Co., Ltd.; MFR: 30 g/10 min) and 5% by mass of a fumaric acid-modified PPE (CX-1 manufactured by Idemitsu Kosan Co., Ltd.; amount of modification: 1.7% by mass), 28 parts by mass of a carbon fiber (TR06UB4E manufactured by Mitsubishi Chemical Corporation; chopped carbon fiber) were side-fed and kneaded using a twin-screw kneader (ZSK 32 MC manufactured by Coperion GmbH) with a cylinder diameter of 32 mm to obtain a composition.

In order to measure the interfacial shear strength between the resin and the carbon fiber constituting the composition, the above-described micro-droplet test was performed.

To be more specific, 95% by mass of the SPS and 5% by mass of the fumaric acid-modified PPE were kneaded with the twin-screw kneader, and then the interfacial shear strength between the resin and the carbon fiber was measured by a micro-droplet method.

<Mechanical Property Test>

Pellets obtained by kneading with a twin-screw kneader were injection-molded using an injection molding machine [SH100 manufactured by Sumitomo Heavy Industries, Ltd.] under the conditions of a cylinder temperature of 300°C and a mold temperature of 150°C to obtain a test piece. An ISO mold was used as the mold. Using this test piece, the following tests were performed.

1. Tensile strength test

The tensile strength (MPa) of the test piece was measured by performing a tensile test using a tensile tester (manufactured by Shimadzu Corporation, trade name: Autograph AG5000B) in accordance with ISO 527-1:2012 (2nd edition) under the room temperature conditions of an initial chuck-to-chuck spacing of 115 mm and a tensile speed of 5 mm/min. As shown in Table 1, the tensile strength was 79 MPa.

2. Bending test

The obtained pellets were injection-molded under the above-described conditions to prepare a bending test piece (4 mm thickness). In accordance with ISO 178:2010, the bending strength (MPa) and the bending modulus (%) were measured under the conditions of an inter-fulcrum distance of 4 cm, a temperature of 23°C, and a bending speed of 2 mm/min. The larger the numerical value, the better the bending characteristics.

3. Impact resistance test

The obtained pellets were injection-molded under the above-described conditions to prepare a Charpy test piece (4 mm thickness). The Charpy impact strength at 23°C was measured in accordance with ISO 179-1:2010 using a test piece in which a notch (r = 0.25 mm $\pm$0.05 mm) was imparted to the test piece by post-processing.

Examples 16 and 17

A composition was obtained in the same manner as in Example 15 except that the amount of the SPS and the amount of the fumaric acid-modified PPE were as shown in a table. A micro-droplet test, a tensile strength test, a bending test, and an impact resistance test were performed in the same manner as in Example 15. The results are shown in Table 2.

Comparative Example 4

A composition was obtained in the same manner as in Example 15 using the composition ratio described in the table except that the fumaric acid-modified PPE was not included. A micro-droplet test, a tensile strength test, a bending test, and an impact resistance test were performed in the same manner as in Example 15. The results are shown in Table 2.

Example 18

With respect to 100 parts by mass of a resin composed of 28% by mass of SPS (manufactured by Idemitsu Kosan Co., Ltd.: XAREC 300ZC, MFR: 30 g/10 min), 68% by mass of polyamide resin (nylon 6,6: Vydyne (registered trademark) 50BWFS manufactured by Ascend Performance Materials LLC), and 4% by mass of fumaric acid-modified PPE (CX-1 manufactured by Idemitsu Kosan Co., Ltd.; amount of modification: 1.7% by mass), 27 parts by mass of a carbon fiber (TR06UB4E manufactured by Mitsubishi Chemical Corporation; chopped carbon fiber) were side-fed and kneaded using a twin-screw kneader (ZSK 32 MC manufactured by Coperion GmbH) with a cylinder diameter of 32 mm to obtain a composition. A micro-droplet test, a tensile strength test, a bending test, and an impact resistance test were performed in the same manner as in Example 15. The results are shown in Table 2.

Comparative Example 5

With respect to 100 parts by mass of a polyamide resin (nylon 6,6: Vydyne (registered trademark) 50BWFS manufactured by Ascend Performance Materials LLC), 27 parts by mass of a carbon fiber (TR06UB4E manufactured by Mitsubishi Chemical Corporation; chopped carbon fiber) were side-fed and kneaded using a twin-screw kneader (ZSK 32 MC manufactured by Coperion GmbH) with a cylinder diameter of 32 mm to obtain a composition. A micro-droplet test, a tensile strength test, a bending test, and an impact resistance test were performed in the same manner as in Example 15. The results are shown in Table 2.

Comparative Example 6

With respect to 100 parts by mass of a polyamide resin (nylon 6,6: Vydyne (registered trademark) 50BWFS manufactured by Ascend Performance Materials LLC), 40 parts by mass of a glass fiber (CS 3DE-456S manufactured by Nitto Boseki Co., Ltd.; chopped glass fiber) were side-fed and kneaded using a twin-screw kneader (ZSK 32 MC manufactured by Coperion GmbH) with a cylinder diameter of 32 mm to obtain a composition. A micro-droplet test, a tensile strength test, a bending test, and an impact resistance test were performed in the same manner as in Example 15. The results are shown in Table 2.

Comparative Example 7

A composition was obtained in the same manner as in Example 18 except that 40 parts by mass of a glass fiber (CS 3DE-456S manufactured by Nitto Boseki Co., Ltd.; chopped glass fiber) were side-fed instead of the carbon fiber. A micro-droplet test, a tensile strength test, a bending test, and an impact resistance test were performed in the same manner as in Example 15. The results are shown in Table 2.

Table 2

| | Resin (S) (100 parts by mass) Carbon fiber (C) / glass fiber | | | | | | Carbon fiber (C) | Evaluation results | | | | |
|---|---|---|---|---|---|---|---|---|---|---|---|---|
| | Thermoplastic resin (B) | | Modified PAE (A) | | | | | Interfacial shear strength | Tensile strength | Bending modulus | Bending strength | Impact resistance |
| | SPS 300ZC | PA66 Vydyne 50BWFS | CX-1 | | | | | | | | | |
| (Unit) | % by mass | % by mass | % by mass | Type | part by mass | part by volume | Surface state | MPa | MPa | GPa | MPa | kJ/m$^2$ |
| Ex. 15 | 95 | - | 5 | Carbon fiber | 28 | 14 | Urethane-based sizing agent treatment | 30 | 119 | 17 | 185 | 5.4 |
| Ex. 16 | 90 | - | 10 | | 28 | 14 | | 39 | 129 | 17 | 190 | 5.7 |
| Ex. 17 | 85 | - | 15 | | 28 | 14 | | 49 | 139 | 17 | 215 | 5.8 |
| Comp. Ex. 4 | 100 | - | 0 | | 28 | 14 | | 18 | 74 | 17 | 120 | 5.0 |
| Ex. 18 | 28 | 68 | 4 | | 27 | 14 | | - | 220 | 15 | 330 | 8.0 |
| Comp. Ex. 5 | - | 100 | 0 | | 27 | 14 | | - | 210 | 14 | 320 | 7.0 |
| Comp. Ex. 6 | - | 100 | 0 | Glass fiber | 40 | 14 | | - | 190 | 9 | 275 | 11.0 |
| Comp. Ex. 7 | 28 | 68 | 4 | | 40 | 14 | | - | 175 | 9 | 250 | 11.0 |

Carbon fiber (C): TR06UB4E manufactured by Mitsubishi Chemical Corporation; chopped carbon fiber
Glass fiber: CS 3DE-456S manufactured by Nitto Boseki Co., Ltd.; chopped glass fiber

It can be seen that Examples of the present invention have high interfacial shear strength and are excellent in mechanical properties because the interfacial shear strength between the resin and the carbon fiber is high. It can be seen from the results of Example 18 that the molded body of the present invention has high mechanical properties even when the thermoplastic resin is a mixture of an SPS resin and a polyamide.

Example 19

Resin pellets composed of 95% by mass of SPS (XAREC 300ZC manufactured by Idemitsu Kosan Co., Ltd.; MFR: 30 g/10 min) and 5% by mass of a fumaric acid-modified polyphenylene ether (CX-1 manufactured by Idemitsu Kosan Co., Ltd.; amount of modification: 1.7% by mass) were first melted and retained at 300°C for 2 minutes using a press mold, held under a pressure of 1 MPa for 1 minute, and cooled at 40°C for 1 minute to obtain a resin film having a thickness of 200 μm and a resin film having a thickness of 100 μm. At this time, in order to adjust the thickness of the resin film, a Kapton film or an aluminum plate was appropriately used as a spacer. The obtained film was cut into 10 cm x 8 cm to prepare a resin film member.

As a carbon fiber, a carbon cloth (manufactured by Mitsubishi Chemical Corporation: PYROFIL woven fabric, TR 3110M, basis weight 200 g/$m^2$, thickness of 0.23 mm per sheet) was prepared, subjected to a desizing treatment using acetone, air-dried for 12 hours, and then dried in an oven at 60°C for 60 minutes. The carbon cloth after desizing was cut into 10 cm x 8 cm to prepare a carbon member.

Seven sheets of the obtained resin film members and six sheets of the carbon members were alternately laminated so that the carbon members were positioned between the resin film members. At this time, a resin film having a thickness of 100 μm was disposed as the outermost layer. The laminated member was pressed stepwise with a vacuum press at a vacuum degree of -0.1 MPa or less and 330°C under the conditions of press pressures of 0 MPa for 20 minutes, 5 MPa for 10 minutes, 15 MPa for 28 minutes, and 60 MPa for 2 minutes, and then returned to the atmosphere and cooled to 20°C to obtain a resin laminated body. The thickness of the obtained resin laminated body was 1.6 mm.

Using a diamond cutter, the resin laminated body was cut to a 1 cm width and annealed (dried at 120°C for 12 hours) to prepare a test piece. Using this test piece, the bending strength (MPa) was measured in accordance with ISO 178:2010 under the conditions of a temperature of 23°C, a radius 5 mm of an indenter, an inter-fulcrum distance of 4 cm, and a test speed of 2 mm/min. The results are shown in Table 3.

Example 20

SPS (XAREC 300ZC manufactured by Idemitsu Kosan Co., Ltd.; MFR: 30 g/10 min) was first melted and retained at 300°C for 2 minutes using a press mold, held under a pressure of 1 MPa for 1 minute, and cooled at 40°C for 1 minute to obtain a resin film having a thickness of 200 μm and a resin film having a thickness of 100 μm. At this time, in order to adjust the thickness of the resin film, a Kapton film or an aluminum plate was appropriately used as a spacer. The obtained film was cut into 10 cm x 8 cm to prepare a resin film member.

As a carbon fiber, a carbon cloth (manufactured by Mitsubishi Chemical Corporation: PYROFIL woven fabric, TR 3110M, basis weight 200 g/$m^2$, thickness of 0.23 mm per sheet) was prepared, subjected to a desizing treatment using acetone, air-dried for 12 hours, and then dried in an oven at 60°C for 60 minutes. The carbon cloth after desizing was immersed in a 5% by mass fumaric acid-modified polyphenylene ether/chloroform solution for 6 hours and then taken out. As the fumaric acid-modified polyphenylene ether, CX-1 (manufactured by Idemitsu Kosan Co., Ltd.) having an amount of modification of 1.7% by mass was used. The carbon cloth immersed in the fumaric acid-modified PPE was air-dried for 12 hours, then dried in an oven at 60°C for 60 minutes, and then cut into 10 cm x 8 cm to prepare a carbon member.

Seven sheets of the obtained resin film members and six sheets of the carbon members were laminated in the same manner as in Example 19 to obtain a laminated body. The bending strength (MPa) was measured in the same manner as in Example 19. The results are shown in Table 3.

Example 21

A laminated body was obtained in the same manner as in Example 20 except that the carbon cloth after desizing was immersed in 5% by mass unmodified polyphenylene ether (Iupiace PX100L manufactured by Mitsubishi Chemical Corporation; polyphenylene ether)/chloroform solution for 6 hours. The bending strength (MPa) was measured in the same manner as in Example 19. The results are shown in Table 3.

Comparative Example 8

A resin member composed of 100% by mass of SPS (XAREC 300ZC manufactured by Idemitsu Kosan Co.,

Ltd.; MFR: 30 g/10 min) was first melted and retained at 300°C for 2 minutes using a press mold, held under a pressure of 1 MPa for 1 minute, and cooled at 40°C for 1 minute to obtain a resin film having a thickness of 200 μm and a resin film having a thickness of 100 μm. At this time, in order to adjust the thickness of the resin film, a Kapton film or an aluminum plate was appropriately used as a spacer. The obtained film was cut into 10 cm x 8 cm to prepare a resin film member.

As a carbon fiber, a carbon cloth (manufactured by Mitsubishi Chemical Corporation: PYROFIL woven fabric, TR 3110M, basis weight 200 g/$m^2$, thickness of 0.23 mm per sheet) was prepared, subjected to a desizing treatment using acetone, air-dried for 12 hours, and then dried in an oven at 60°C for 60 minutes. After drying, the product was cut into 10 cm x 8 cm to prepare a carbon member.

The obtained resin film member and the carbon member were laminated in the same manner as in Example 20 to obtain a laminated body. The bending strength (MPa) was measured in the same manner as in Example 19. The results are shown in Table 3.

Table 3

| | Resin (100 parts by mass) | | | | | | | Carbon fiber | | | Evaluation results |
|---|---|---|---|---|---|---|---|---|---|---|---|
| | Thermoplastic resin | | Modified polyarylene ether (A) | | | | Unmodified PAE* | | | | Bending strength |
| | SPS 300ZC | SPS 130ZC | Production Example 1 | Production Example 2 | Production Example 3 | CX-1 | PAE | | | | |
| (Unit) | % by mass | % by mass | % by mass | % by mass | % by mass | % by mass | % by mass | State | part by mass | Surface state | MPa |
| Ex. 19 | 95 | - | - | - | - | 5 | - | - | 52 | Desizing treatment | 360 |
| Ex. 20 | 95 | - | - | - | - | 5 | - | Immersed in modified PAE | 52 | | 416 |
| Ex. 21 | 95 | - | - | - | - | - | 5 | Immersed in PAE | 52 | | 346 |
| Comp. Ex. 8 | 100 | - | - | - | - | - | - | - | 52 | | 248 |

*PAE = polyarylene ether
Carbon fiber: carbon cloth (manufactured by Mitsubishi Chemical Corporation: PYROFIL woven fabric, TR 3110M, basis weight 200 g/$m^2$, thickness of 0.23 mm per sheet)

It can be seen from the Examples that the molded body of the present invention has excellent mechanical properties even when the carbon fiber is in the form of a woven fabric. Further, it can be seen that a molded body obtained by a production method including a step of preparing a carbon member containing the polyarylene ether and the carbon fiber and a step of adding a thermoplastic resin to the carbon member of the present invention has excellent mechanical strength regardless of whether the polyarylene ether is modified or unmodified due to the presence of these steps.

## Claims

**1.** A resin composition comprising:

a resin (S) containing a polyarylene ether (A) modified with a functional group and a thermoplastic resin (B), and a carbon fiber (C).

**2.** The resin composition according to claim 1, wherein the polyarylene ether (A) modified with a functional group is a dicarboxylic acid-modified polyarylene ether.

**3.** The resin composition according to claim 2, wherein the dicarboxylic acid-modified polyarylene ether is a fumaric acid-modified polyarylene ether or a maleic anhydride-modified polyarylene ether.

**4.** The resin composition according to any one of claims 1 to 3, wherein the polyarylene ether (A) modified with a functional group is contained in an amount of 0.5 to 30% by mass based on 100% by mass of the resin (S).

**5.** The resin composition according to any one of claims 1 to 4, which contains 1 to 500 parts by mass of the carbon fiber (C) with respect to 100 parts by mass of the resin (S).

**6.** The resin composition according to any one of claims 1 to 4, which contains 1 to 50 parts by mass of the carbon fiber (C) with respect to 100 parts by mass of the resin (S).

**7.** The resin composition according to any one of claims 1 to 6, wherein the thermoplastic resin (B) is at least one selected from the group consisting of a polycarbonate-based resin, a polystyrene-based resin, a polyamide, and a polyolefin.

**8.** The resin composition according to claim 7, wherein the thermoplastic resin (B) is a polystyrene-based resin.

**9.** The resin composition according to any one of claims 1 to 8, wherein the carbon fiber (C) is at least one carbon fiber selected from the group consisting of a PAN-based carbon fiber, a pitch-based carbon fiber, a thermosetting carbon fiber, a phenol-based carbon fiber, a vapor-grown carbon fiber, and a recycled carbon fiber (RCF).

**10.** A molded body comprising the resin composition according to any one of claims 1 to 9.

**11.** The molded body according to claim 10, which is an injection molded body.

**12.** The molded body according to claim 10, which is a unidirectional fiber reinforcement.

**13.** The molded body according to claim 10, comprising at least one member selected from the group consisting of woven carbon fibers and non-woven carbon fibers.

**14.** A laminated body obtainable by laminating a plurality of the molded bodies according to any one of claims 10 to 13.

**15.** A method for producing the molded body according to any one of claims 10 to 13, comprising:

a step of preparing a carbon member containing the polyarylene ether (A) modified with a functional group and the carbon fiber (C); and
a step of adding the thermoplastic resin (B) to the carbon member.

**16.** A method for producing a resin molded body, comprising:

a step of preparing a carbon member containing a polyarylene ether not modified with a functional group and a carbon fiber; and
a step of adding a thermoplastic resin to the carbon member.

**17.** The method for producing a resin molded body according to claim 16, wherein the carbon member has at least one form selected from the group consisting of a woven fabric, a non-woven fabric, and a unidirectional material.

**18.** A resin molded body obtainable by the production method according to claim 16 or 17.

**19.** A laminated body obtainable by laminating a plurality of the molded bodies according to claim 18.

FIG. 1

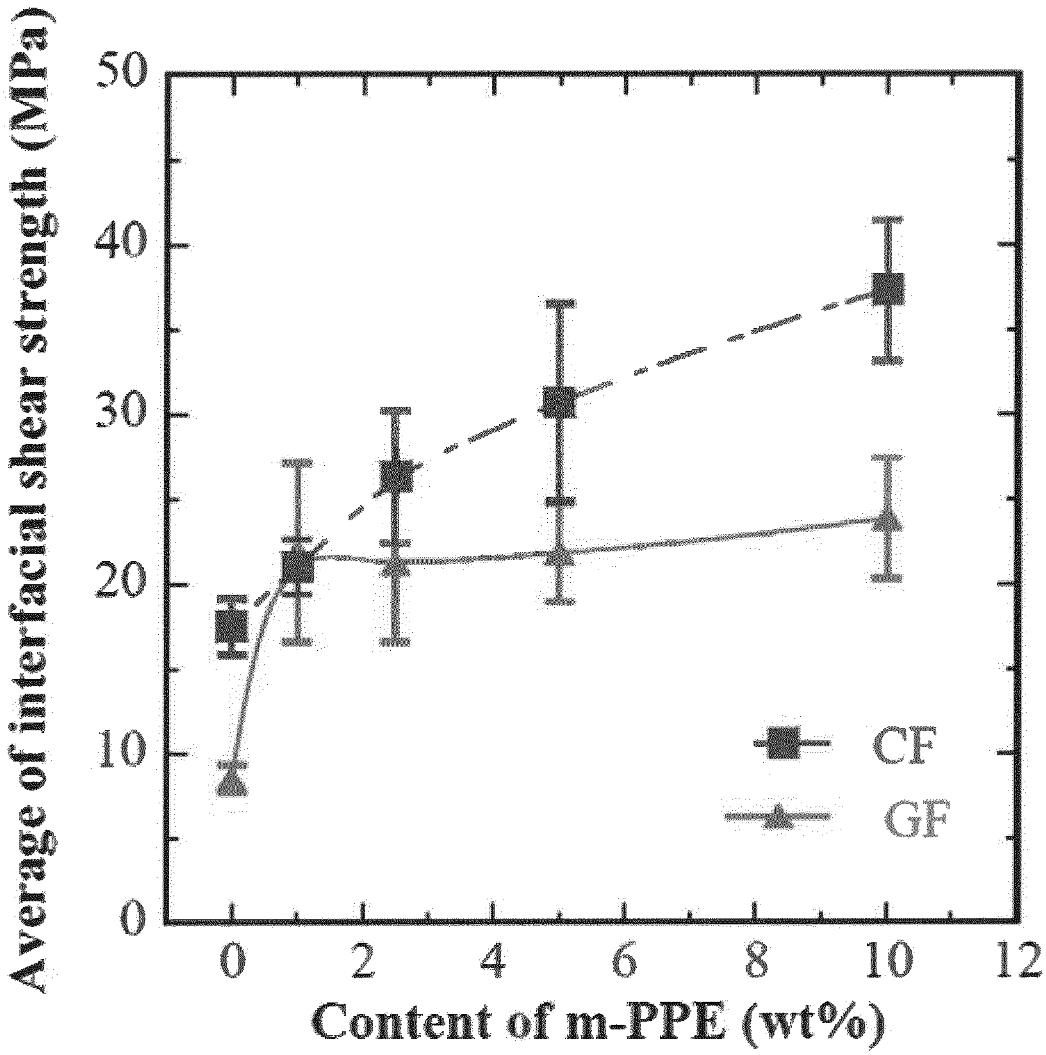

Average of interfacial shear strength (MPa)
50
40
30
20
10
0
0
2
4
6
8
10
12
Content of m-PPE (wt%)
CF
GF

## INTERNATIONAL SEARCH REPORT

International application No.
PCT/JP2019/042220

A. CLASSIFICATION OF SUBJECT MATTER
Int.Cl. C08L101/00(2006.01)i, C08L23/00(2006.01)i, C08L25/06(2006.01)i, C08L69/00(2006.01)i, C08L71/00(2006.01)i, C08L77/00(2006.01)i

According to International Patent Classification (IPC) or to both national classification and IPC

B. FIELDS SEARCHED

Minimum documentation searched (classification system followed by classification symbols)
Int.Cl. C08L101/00, C08L23/00, C08L25/06, C08L69/00, C08L71/00, C08L77/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2017/056693 A1 (TEIJIN LTD.) 06 April 2017, claims 1, 3-5, 8, 10, paragraphs [0009], [0018], [0023], [0029], [0034], [0046], examples 2, 6, 12 & US 2018/0134856 A1, claims, examples & EP 3281969 A1 & CN 107531914 A | 1-19 |
| X | JP 2001-302904 A (ASAHI KASEI CORPORATION) 31 October 2001, claims 1, 9, examples 1-4, 8 (Family: none) | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28.11.2019 | 10.12.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2019/042220

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2008-106265 A (TORAY INDUSTRIES, INC.) 08 May 2008, claims 1, 5-7, 11, example 31<br>(Family: none) | 1-7, 9-19<br>8 |
| X<br>A | JP 5-65410 A (MITSUBISHI GAS CHEMICAL COMPANY, INC.) 19 March 1993, claim 1, examples 1-4<br>& EP 528581 A1, claims, examples | 1-7, 9-19<br>8 |
| X<br>A | JP 4-154864 A (MITSUBISHI GAS CHEMICAL COMPANY, INC.) 27 May 1992, claim 1, examples 1-4<br>(Family: none) | 1-7, 9-19<br>8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008208201 A
- JP 2018145245 A
- US 3306874 A
- US 3306875 A
- US 3257357 A
- US 3257358 A